# EUROPÄISCHE PATENTANMELDUNG

(11) **EP 4 258 402 A1**
(43) Veröffentlichungstag der Anmeldung: **11.10.2023**
(21) Anmeldenummer: 23163457.7
(22) Anmeldetag: 22.03.2023
(51) Int. Cl.: H01M 10/04, H01M 10/0583, H01M 50/466, H01M 10/052

(54) **VORRICHTUNG UND VERFAHREN ZUM HERSTELLEN UMWICKELTER Z-GEFALTETER ZELLSTACKS**

(30) Priorität: 04.04.2022 DE 102022108035; 04.04.2022 DE 102022108036; 11.05.2022 EP 22172822
(71) Anmelder: Grob-Werke GmbH & Co. KG, 87719 Mindelheim (DE)
(72) Erfinder: Glück, Moritz, 82362 Weilheim (DE); Schatz, Tobias, 87730 Bad Grönenbach (DE); Rathgeb, Michael, 86152 Augsburg (DE); Guggenmos, Florian, 87757 Hasberg (DE)
(74) Vertreter: KASTEL Patentanwälte PartG mbB

(57) **Zusammenfassung**

Um umwickelte Zellstapel in Großserie schneller und dennoch prozesssicher herzustellen, schafft die Erfindung ein Verfahren und eine Vorrichtung (24) zur Herstellung z-gefalteter Zellstacks (10). Damit werden erste und zweite Zellkomponenten (12, 14) wechselweise gestapelt, während eine Separatorbahn (26) z-förmig oder mäanderförmig dazwischen eingefügt wird und anschließend um den so erhaltenen Zellstapel (10) noch einmal gewickelt wird. Das Verfahren und die Vorrichtung sind so ausgebildet, dass das Wickeln zumindest teilweise parallel an einem zuvor erhaltenen Zellstapel (10) durchgeführt wird, während das Stapeln zum Erhalten des nächsten Zellstapels (10) durchgeführt wird. Hierzu wird ein Vorrat der Separatorbahn (26), der zum Wickeln benötigt wird, in einem Separatorpufferspeicher (28) bereitgestellt, am in Förderrichtung hinteren Ende mittels eines Trenngreifers (32) abgeschnitten und festgehalten und beim Wickeln mittels des Trenngreifers (32) nachgeführt.

## Beschreibung

Die Erfindung betrifft ein Verfahren zur Herstellung z-gefalteterZellstacks. Weiter betrifft die Erfindung eine Vorrichtung zur Herstellung z-gefalteter Zellstacks.

Die Erfindung liegt auf dem Gebiet der Fertigung von Zellstacks, wie z.B. für Elektrodenanordnungen und insbesondere für Batteriezellen und Zellverbünden hierfür. Mehr insbesondere liegt die Erfindung auf dem technischen Gebiet von Großserienanlagen zur Großserienherstellung von Batteriezellen oder dergleichen Zellverbünden. Insbesondere sollen Batteriezellen oder dergleichen zur Verwendung in der Elektromobilität, insbesondere Batteriezellen oder dergleichen für die Hauptstromversorgung von Elektrofahrzeugen, wie insbesondere Personenkraftwagen und Lastkraftwagen, in Großserie gefertigt werden.

Zum technologischen Hintergrund der Erfindung wird insbesondere auf folgende Literaturstellen verwiesen:
[1] EP 2 866 293 B1
[2] EP 2 557 626 B1
[3] KR 100832801 B1
[4] DE 10 2007 057 129 B4
[5] EP 3 415 265 A1
[6] DE 10 2017 131 345 A1
[7] WO 2020/216758
[8] WO 2020/192845 A1
[9] EP 2 149 927 A1
[10] DE 10 2012 000 615 A1
[11] DE 10 2012 000 616 A1
[12] https://www.youtube.com/watch?v=oKiR9sIStLo
[13] https://www.youtube.com/watch?v=YAedsOH-VXo
[14] https://www.youtube.com/watch?v=Y4RapyzgG4w
[15] DE 10 2018 200 958 A1
[16] US 2012/0110839 A1
[17] EP 2 770 569 A2

Speziell geht es bei Ausführungsformen der Erfindung um eine Vorrichtung und ein Verfahren zum Z-Falten und anschließenden Umwickeln ("Wrapping") von Zellkomponenten.

Die Erfindung hat sich zur Aufgabe gestellt, eine Vorrichtung und ein Verfahren zum Z-Falten und Umwickeln von Zellkomponenten, insbesondere für eine Batteriezelle oder dergleichen, zur Verfügung zu stellen, bei denen die Prozesssicherheit vergrößert ist.

Zum Lösen dieser Aufgabe schafft die Erfindung eine Vorrichtung und ein Verfahren gemäß den unabhängigen Ansprüchen. Vorteilhafte Ausgestaltungen sind Gegenstand der Unteransprüche.

Die Erfindung schafft gemäß einem ersten Aspekt davon ein Verfahren zur Herstellung z-gefalteter Zellstacks, umfassend:
a) Bereitstellen von ersten und zweiten Zellkomponenten und Bereitstellen einer Separatorbahn,
b) Wechselweises Stapeln der ersten und zweiten Zellkomponenten, wobei die Separatorbahn z-förmig oder mäanderförmig derart dazwischen eingefügt wird, dass sie wechselweise auf einer ersten Seite um eine vorhergehend platzierte Zellkomponente umgeschlagen wird und dann auf einer der ersten Seite gegenüberliegenden zweiten Seite um eine nachfolgend platzierte Zellkomponente umgeschlagen wird, um so einen Zellstapel zu erhalten;
d) Bereitstellen eines Längenabschnitts der Separatorbahn in einem Separatorpufferspeicher;
e) Durchtrennen der Separatorbahn (26) am in Förderrichtung hinteren Ende (20) des Längenabschnitts (58) mittels eines beweglichen Trenngreifers (32) und Festhalten der Trennstelle (82) im Bereich des hinteren Endes (20) mittels des Trenngreifers (32) und
f) Wickeln des in Schritt d) bereitgestellten Längenabschnitts (58) der der Separatorbahn um den in Schritt b) erhaltenen Zellstapel, wobei die Trennstelle (82) mittels des diese festhaltenden Trenngreifers (32) nachgeführt wird;
wobei Schritt f) zumindest teilweise parallel an einem zuvor erhaltenen Zellstapel durchgeführt wird, während Schritt b) zum Erhalten des nächsten Zellstapels durchgeführt wird.

Vorzugsweise umfasst Schritt e) auch Festhalten der vorderen Trennstelle, insbesondere als Beginn des nächsten Faltvorgangs. Es wird somit auch bevorzugt ein Festhalten der an der Schnittstelle anderen Seite der Trennstelle durchgeführt, insbesondere mittels Niederhalter an einem Stapeltisch oder einer sonstigen Stapeleinrichtung.

Vorzugsweise umfasst Schritt e) den Schritt:
e1) Aufeinander zu Bewegen eines ersten und zweiten Greifelements des Trenngreifers, um die Separatorbahn dazwischen zu erfassen, und Bewegen einer Schneide des Trenngreifers relativ zu dem ersten und/oder zweiten Greifelement, um die Separatorbahn zu durchtrennen.

Vorzugsweise umfasst Schritt e) den Schritt:
e2) Bewegen einer Halte- und Schneideinheit des Trenngreifers, die eine Schneide und ein zu der Schneide bewegbares und eine der Schneide vorauslaufend vorgespanntes, insbesondere als Klemmleiste ausgebildetes, Greifelement aufweist, auf die Separatorbahn zu, um diese zwischen dem Greifelement und einem Gegenlager zu halten und das Durchtrennen unter Vorschieben der Schneide über das gegen das Gegenlager und die Separatorbahn anliegende Greifelement durchzuführen.

Vorzugsweise umfasst Schritt f) den Schritt:
f1) Spannen der Separatorbahn. Vorzugsweise wird die Separatorbahn mit variabler Bahnlänge gespannt. Vorzugsweise erfolgt das Spannen mit einer elastischen Spanneinheit. Beispielsweise können Umlenkeinheiten an dem Separatorpufferspeicher elastisch nachgiebig ausgebildet sein. Beispielsweise kann alternativ oder zusätzlich ein Teil der elastischen Spanneinheit dem Trenngreifer zugeordnet sein.

Vorzugsweise umfasst Schritt f) den Schritt:
f2) Einstellen, Aufrechterhalten, Regeln und/oder Steuern der Bahnspannung der Separatorbahn beim Wickeln.

Vorzugsweise umfasst Schritt f) den Schritt:
f3) elastisches Vorspannen des Trenngreifers zum Spannen der Separatorbahn.

Vorzugsweise umfasst Schritt f) den Schritt:
f4) variables Einstellen einer Gegenkraft zum Konstanthalten der Bahnspannung während des gesamten Wickelvorganges an einer zusätzlichen Drehlagerung des Trenngreifers, insbesondere über eine mechanische oder pneumatische Feder.

Vorzugsweise umfasst das Verfahren den Schritt:
c) Überführen des Zellstapels von einer Stapeleinrichtung zu einer Wickeleinrichtung. Vorzugsweise wird in Schritt c) der Zellstapel zwischen geöffneten Greifelementen des Trenngreifers hindurch bewegt. Bei einer bevorzugten Ausgestaltung wird hierzu in Schritt c) der Zellstapel zwischen einer Klemmleiste und einer Gegenlagerung (Beispiele für Greifelemente) des Trenngreifers hindurch bewegt wird.

Vorzugsweise umfasst das Verfahren den Schritt:
g) Fixieren einer Trennstelle der Separatorbahn an dem umwickelten Zellstapel.

Vorzugsweise umfasst das Verfahren, insbesondere als Teil von Schritt g), den Schritt:
g1) Zuführen der Trennstelle zu dem umwickelten Zellstapel mittels des Trenngreifers.

Vorzugsweise umfasst das Verfahren, insbesondere als Teil von Schritt g), den Schritt:
g2) Applizieren einer Fluidströmung zum Vermeiden oder zumindest Verringern von Faltenwurf.

Vorzugsweise umfasst das Verfahren, insbesondere als Teil von Schritt g), den Schritt:
g3) Glattstreichen eines Endbereichs der Separatorbahn, vorzugsweise mittels wenigstens einer Rolle oder einem voreilenden rundlichen Element. Alternativ oder zusätzlich kann das Glattstreichen des Endbereichs auch mit einer Gleitfläche erfolgen.

Vorzugsweise umfasst das Verfahren, insbesondere als Teil von Schritt g), den Schritt:
g4) Fixieren eines Endbereichs der Separatorbahn an dem umwickelten Zellstapel, vorzugsweise mittels Aufbringens wenigstens eines Klebestreifens.

Vorzugsweise umfasst das Verfahren, insbesondere als Teil von Schritt g), den Schritt:
g5) Übergeben des umwickelten Zellstapels an nachfolgende Prozesse, vorzugsweise mit im Wesentlichen vertikal ausgerichteten Zellkomponenten.
Vorzugsweise kann der in dem Separatorpufferspeicher bereitgestellte Längenabschnitt variabel eingestellt werden.

Vorzugsweise umfasst das Verfahren, mehr insbesondere Schritt d), den Schritt:
d1) Bilden wenigstens einer Schleife der Separatorbahn mittels relativ zueinander beweglichen Umlenkrollen als Vorrat zum Wickeln in Schritt f).

Vorzugsweise umfasst das Verfahren, mehr insbesondere Schritt d), den Schritt:
d2) Aufbau eines Vorrats der Separatorbahn zum Wickeln in Schritt f), wobei Schritt d2) zeitlich und/oder räumlich zwischen Schritt b) und Schritt f) durchgeführt wird.

Es ist bevorzugt, dass der Schritt b) mit einer Stapeleinrichtung durchgeführt wird und der Schritt f) mit einer Wickeleinrichtung durchgeführt wird, wobei die Stapeleinrichtung und die Wickeleinrichtung zumindest teilweise räumlich übereinander angeordnet sind. Bei anderen Ausgestaltungen können die Stapeleinrichtung und die Wickeleinrichtung auch zumindest teilweise räumlich nebeneinander angeordnet sein.

Vorzugsweise umfasst das Verfahren den Schritt:
c) Überführen des Zellstapels von einer Stapeleinrichtung zu einer Wickeleinrichtung.

Vorzugsweise umfasst das Verfahren, mehr insbesondere Schritt c), den Schritt:
c1) Kippen des Zellstapels von einer Stapellage mit zum Stapeln im Wesentlichen horizontal ausgerichteten Zellkomponenten in eine Überführungslage mit im Wesentlichen vertikal ausgerichteten Zellkomponenten.

Wenn der Zellstapel gekippt wird, wird er mit Niederhalterfingern oder dergleichen (Beispiel für Halteelement) auf dem Tisch oder der sonstigen Unterlage geklemmt.

Vorzugsweise umfasst das Verfahren, mehr insbesondere Schritt c), den Schritt:
c2) Nachziehen der Separatorbahn bei einem Überführen des Zellstapels von Schritt b) zu Schritt e).

Vorzugsweise umfasst das Verfahren, mehr insbesondere Schritt c), den Schritt:
c3) Halten des Zellstapels mittels eines zwischen einer Haltestellung und einer Freigabestellung beweglichen Halteelements auf einer beweglichen Unterlage und Bewegen des insbesondere durch Klemmen gehaltenen Zellstapels zusammen mit der Unterlage.

Vorzugsweise umfasst Schritt f):
f1) Erfassen des Zellstapels mit einem Wickelgreifer.

Vorzugsweise umfasst Schritt f):
f2) Drehen des Zellstapels, um die Separatorbahn darum zu wickeln.

Vorzugsweise umfasst Schritt f):
f3) Einstellen, Aufrechterhalten, Regeln und/oder Steuern der Bahnspannung der Separatorbahn beim Wickeln.

Vorzugsweise umfasst Schritt f):
f4) elastisches Spannen der Separatorbahn.

Vorzugsweise umfasst Schritt f):
f5) Leeren eines einen Vorrat der Separatorbahn zum Wickeln enthaltenden Separatorpufferspeichers.

Vorzugsweise umfasst Schritt f):
f6) Nachführen einer Halterung für eine Trennstelle der Separatorbahn.

Bei besonders bevorzugten Ausgestaltungen ist vorgesehen, dass sich der Zellstapel immer in einer mechanischen Klemmung befindet. Damit lässt sich das Risiko vermeiden, dass die Genauigkeit verloren gehen kann, da die Elektroden zueinander verrutschen, unter anderem da die Zellkomponenten wie Anode und Kathode oft unterschiedlich groß sind.

Es ist daher bevorzugt, dass der Zellstapel zumindest während aller Überführungen und Bewegungen bis zur endgültigen Fixierung mittels Tapeapplikation nach dem Umwickeln zur Beibehaltung der Position der Zellkomponenten in dem Zellstapel mechanisch geklemmt wird.

Gemäß einem weiteren Aspekt schafft die Erfindung eine Vorrichtung zur Herstellung z-gefalteter Zellstacks, umfassend:
eine Stapeleinrichtung zum wechselweise Stapeln einer ersten und einer zweiten Zellkomponente zu einem Zellstapel, wobei die Stapeleinrichtung eine Separatorbahneinfügeeinrichtung zum z-förmigen oder mäanderförmigen Einfügen einer Separatorbahn zwischen den Zellkomponenten derart, dass die Separatorbahn wechselweise auf einer ersten Seite um eine vorhergehend platzierte Zellkomponente umgeschlagen ist und dann auf einer der ersten Seite gegenüberliegenden zweiten Seite um eine nachfolgend platzierte Elektrode umgeschlagen ist, aufweist,
eine Wickeleinrichtung zum Wickeln der Separatorbahn um den durch die Stapeleinrichtung gestapelten Zellstapel,
einen Trenngreifer, der zum Trennen der Separatorbahn an einem in Förderrichtung der Separatorbahn hinteren Ende eines zum Wickeln um den Zellstapel zu verwendenden Vorrats der Separatorbahn und zum Halten der Trennstelle an dem hinteren Ende ausgebildet ist, wobei der Trenngreifer zum Nachführen der gehaltenen Trennstelle beweglich ist, und
eine Steuerung,
wobei die Vorrichtung ausgebildet ist, das Wickeln der Separatorbahn um einen zuvor erhaltenen Zellstapel in der Wickeleinrichtung zumindest teilweise parallel zu einem Stapeln eines nächsten Zellstapels in der Stapeleinrichtung durchzuführen.

Es ist bevorzugt, dass der Trenngreifer eine Schneideinrichtung zum Durchtrennen der Separatorbahn und Greifelemente zum Halten der Trennstelle aufweist.

Es ist bevorzugt, dass die Schneideinrichtung eine Schneide und einen Antrieb zum Bewegen der Schneide zum Durchtrennen der Separatorbahn aufweist, wobei ein, insbesondere als Klemmleiste ausgebildetes, Greifelement federnd der Schneide vorausläuft.

Es ist bevorzugt, dass die Schneide zum Halten und Durchtrennen in Richtung auf ein als Gegenlager ausgebildetes weiteres Greifelement zu beweglich ist, um die Separatorbahn zwischen dem federnd vorgelagerten Greifelement und dem Gegenlager zu fixieren und durch Weiterbewegung der Schneide zu durchtrennen.

Es ist bevorzugt, dass die Steuerung dazu ausgebildet ist, eine Bewegung des Trenngreifers derart zu steuern, dass der Trenngreifer mit daran gehaltener Trennstelle der Separatorbahn beim Wickeln nachgeführt wird.

Es ist bevorzugt, dass die Steuerung dazu ausgebildet ist, eine Bewegung des Trenngreifers derart zu steuern, dass eine Bahnspannung der durch den Trenngreifer gehaltenen Separatorbahn beim Wickeln aufrechterhalten, geregelt und/oder gesteuert wird.

Es ist bevorzugt, dass der Trenngreifer eine zusätzliche Drehlagerung und eine Vorspanneinrichtung zum Vorspannen (elastischen Beaufschlagen) des Trenngreifers in eine der Drehrichtungen der Drehlagerung aufweist, um eine Bahnspannung der an dem Trenngreifer gehaltenen Separatorbahn beim Wickeln konstant zu halten.

Vorzugsweise weist die Vorrichtung weiter eine Festhalteeinrichtung zum Festhalten der in Förderrichtung vorderen Trennstelle der Separatorbahn, von der die durch den Trenngreifer abgeschnittene und festgehaltene Trennstelle des Längenabschnitts abgeschnitten worden ist, auf. Vorzugsweise lässt sich damit gleich das Stapeln des nächsten Zellstapels beginnen, während der zuvor gestapelte Zellstapel umwickelt wird. Mit anderen Worten ist die Festhalteeinrichtung zum Festhalten des in Förderrichtung vorderen Ende der Separatorbahn an der Schnittstelle an der anderen Seite der Trennstelle ausgebildet. Die Festhalteeinrichtung weist bevorzugt Niederhaltefinger oder dergleichen an einem Stapeltisch oder dergleichen auf.

Vorzugsweise weist die Vorrichtung einen Separatorpufferspeicher zum Zwischenspeichern eines zum Wickeln in der Wickeleinrichtung zu verwendenden Vorrats oder Längsabschnitt der Separatorbahn auf. Der Separatorpufferspeicher ist vorzugsweise zwischen der Stapeleinrichtung und der Wickeleinrichtung angeordnet und/oder weist vorzugsweise relativ zueinander bewegliche Umlenkrollen zum Aufbau wenigstens einer Schleife der Separatorbahn als Vorrat auf.

Erfindungsgemäß weist die Vorrichtung eine Trenn- und Halteeinrichtung zum Trennen der Separatorbahn an einem in Förderrichtung der Separatorbahn hinteren Ende eines zum Wickeln um den Zellstapel zu verwendenden Vorrats der Separatorbahn und zum Halten der Trennstelle an dem hinteren Ende auf. Die Trenn- und Halteeinrichtung ist zum Nachführen der gehaltenen Trennstelle beweglich. Die Trenn- und Halteeinrichtung weist den Trenngreifer mit Schneideinrichtung und Greifelementen auf.

Vorzugsweise weist die Vorrichtung eine Überführungseinrichtung zum Überführen des Zellstapels von der Stapeleinrichtung zu der Wickeleinrichtung auf. Die Überführungseinrichtung ist vorzugsweise dazu eingerichtet, den Zellstapel aus einer Stapellage mit zum Stapeln im Wesentlichen horizontal ausgerichteten Zellkomponenten in eine Überführungslage mit im Wesentlichen vertikal ausgerichteten Zellkomponenten zu kippen. Die Überführungseinrichtung ist vorzugsweise dazu eingerichtet, die Separatorbahn beim Überführen des Zellstapels von der Stapeleinrichtung zu der Wickeleinrichtung nachzuziehen.

Es ist bevorzugt, dass die Stapeleinrichtung und die Wickeleinrichtung zumindest teilweise räumlich übereinander angeordnet sind. Bei anderen Ausgestaltungen ist vorgesehen, dass die Stapeleinrichtung und die Wickeleinrichtung zumindest teilweise räumlich nebeneinander angeordnet sind.

Es ist bevorzugt, dass die Wickeleinrichtung wenigstens einen drehbaren Wickelgreifer zum Greifen des Zellstapels und zum Drehen des Zellstapels, um die Separatorbahn darum zu wickeln, aufweist. Der Wickelgreifer weist vorzugsweise wenigstens ein gabelförmiges Greifelement auf.

Es ist bevorzugt, dass die Wickeleinrichtung eine Bahnspanneinheit zum Einstellen, Aufrechterhalten, Regeln und/oder Steuern der Bahnspannung der Separatorbahn beim Wickeln aufweist. Bei bevorzugten Ausgestaltungen weist die Bahnspanneinheit den Trenngreifer mit zugeordneter Bewegungsapparatur und entsprechendem Teil der Steuerung auf. Weitere Elemente der Bahnspanneinheit können als Teil des Separatorpufferspeichers, dessen Aktoren und entsprechendem Teil der Steuerung ausgebildet sein.

Vorzugsweise weist die Vorrichtung eine Fluidstromapplikatoreinheit zum Applizieren einer Fluidströmung auf einen Endbereich der Separatorbahn zum Vermeiden oder zumindest Verringern von Faltenwurf auf.

Vorzugsweise weist die Vorrichtung eine Glättungseinheit zum Glattstreichen eines Endbereichs der Separatorbahn auf. Die Glättungseinheit weist vorzugsweise wenigstens eine Rolle oder ein voreilendes rundliches Element zum Glattstreichen und/oder wenigstens eine Gleitfläche zum Glattstreichen auf.

Vorzugsweise weist die Vorrichtung eine Positionier- und/oder Fixiereinheit zum Positionieren und/oder Fixieren des Endbereichs der Separatorbahn an dem umwickelten Zellstapel auf. Vorzugsweise ist die Positionier- und/oder Fixiereinheit dazu eingerichtet wenigstens einen Klebestreifen zum Fixieren des Endbereichs aufzubringen.

Es ist bevorzugt, dass die Steuerung dazu eingerichtet ist, die Vorrichtung zum Durchführen des Verfahrens nach einer der voranstehenden Ausgestaltungen anzusteuern.

Gemäß einem weiteren Aspekt schafft die Erfindung ein Computerprogramm, umfassend Anweisungen, die die Vorrichtung nach einer der voranstehenden Ausgestaltungen veranlassen, das Verfahren nach einer der voranstehenden Ausgestaltungen durchzuführen.

Die Steuerung ist insbesondere eine elektronische Steuerung und weist mehr insbesondere einen Computer (im weitesten Sinne einer programmierbaren Recheneinheit, z.B. Prozessor) mit entsprechenden Programmen auf.

Das Verfahren gemäß den zuvor erläuterten Ausgestaltungen kann mit jeder beliebigen Vorrichtung durchgeführt werden, die zum Durchführen der einzelnen Schritte des Verfahrens ausgebildet ist. Vorzugsweise wird das Verfahren mit einer Vorrichtung gemäß einer der oben erläuterten Ausgestaltungen durchgeführt. Die Vorrichtung gemäß einer der zuvor erläuterten Ausgestaltungen wird vorzugsweise zum Durchführen des Verfahrens gemäß einer der zuvor erläuterten Ausgestaltungen verwendet. Es können aber auch andere Verfahren zum Z-Wickeln darauf durchgeführt werden.

Ausführungsbeispiele werden im Folgenden anhand der beigefügten Zeichnungen näher erläutert. Darin zeigt:
- Fig. 1: eine Frontansicht eines Zellstapels, der mit einer Ausführungsform einer Vorrichtung und eines Verfahrens zum Herstellen von Zellstapeln hergestellt ist;
- Fig. 2: eine Frontansicht einer Stapeleinrichtung der Vorrichtung und schematische Darstellung des Stapelschritts des Verfahrens;
- Fig. 3: eine Frontansicht der Ausgangssituation an der Stapeleinrichtung vor Auflegen der ersten Zellkomponente;
- Fig. 4: eine Frontansicht der Stapeleinrichtung und des durch das Stapeln gebildeten Zellstapels nach dem Stapelschritt - es ist die Situation nach Beendigung des Stapelprozesses dargestellt;
- Fig. 5: eine Draufsicht auf die Stapeleinrichtung und den durch das Stapeln gebildeten Zellstapel nach dem Stapelschritt - es ist die Situation nach Beendigung des Stapelprozesses dargestellt;
- Fig. 6: eine Frontansicht der Stapelvorrichtung mit der Position des Zellstapels nach dem Stapelprozess und vor einem Schwenken einer Unterlage der Stapeleinrichtung;
- Fig. 7: die Frontansicht von Fig. 6 nach dem zur Übergabe des Zellstapels erfolgenden Schwenken der Unterlage der Stapeleinrichtung;
- Fig. 8: zeigt eine Frontansicht der gekippten Unterlage mit dem Zellstapel zusammen mit einem Übergabegreifer einer Überführungseinrichtung beim Einführen des Übergabegreifers;
- Fig. 9: zeigt einen weiteren Unterschritt der Übergabe des Zellstapels von der Stapeleinrichtung zu einer Wickeleinrichtung, wobei der Übergabegreifer zum Klemmen des Zellstapels geschlossen ist;
- Fig. 10: zeigt den Übergabegreifer in einer unteren Endlage, um ein Absenken des Übergabegreifers durch einen Trenngreifer hindurch mit gleichzeitigem Nachziehen eines Separators darzustellen;
- Fig. 11: zeigt eine Anfangssituation zum Befüllen eines Separatorpufferspeichers, wobei der Separatorpufferspeicher leer ist;
- Fig. 12: eine Fig. 11 vergleichbare Darstellung bei befülltem Separatorpufferspeicher;
- Fig. 13: eine Frontansicht der Stapeleinrichtung, einer Halte- und Trenneinrichtung und des Separatorpufferspeichers der Vorrichtung zu Beginn eines Schritts des Trennens des Separators bei befülltem Separatorpufferspeicher;
- Fig. 14: eine Ansicht wie in Fig. 13 bei dem Trennen, wobei der Separator mit der Halte- und Trenneinrichtung und mit einem Halteelement der Stapeleinrichtung geklemmt ist;
- Fig. 15: eine Ansicht wie in Fig. 14, wobei der Separator mittels der Halte- und Trenneinrichtung getrennt wird;
- Fig. 16: eine Ansicht wie in Fig. 15, wobei die Stapeleinrichtung in eine Stapelstellung zum Stapeln eines neuen Zellstapels überführt ist und ein neuer Stapelvorgang gestartet wird;
- Fig. 17: eine Seitenansicht des von dem Übergabegreifer gehaltenen Zellstapels beim Übergeben an die Wickeleinrichtung, die gabelförmige Greifelemente mit als Zinkenpaaren angeordneten Wickelschwertern aufweist, wobei die Greifelemente von hinten eingefahren sind;
- Fig. 18: eine Frontansicht der in Fig. 17 dargestellten Situation; die gabelförmigen Greifelemente fahren horizontal ein, dabei stehen die Zinkenpaare der gabelförmigen Greifelemente aber horizontal;
- Fig. 19: eine Ansicht wie in Fig. 18, wobei die Greifelemente vollständig eingefahren und über eine Klemmung fixiert sind, um den Zellstapel zwischen sich einzuklemmen;
- Fig. 20: eine Ansicht wie in Fig. 19, wobei der Übergabegreifer entfernt ist und die Wickeleinrichtung das Drehen des eingeklemmten Zellstapels zum Umwickeln beginnt;
- Fig. 21: eine Gesamtdarstellung und eine Detaildarstellung von der axialen Seite aus auf die Wickeleinrichtung während des Drehens gesehen, wobei die Trenn- und Halteeinrichtung nachgefahren wird;
- Fig. 22: eine axiale Seitenansicht auf eine sich drehende Wickeleinheit während eines Freifahrens des Separatorpufferspeichers, der zusammen mit der Trenn- und Halteeinrichtung eine Bahnspanneinheit zur Aufrechterhaltung der Bahnspannung beim Wickeln bildet;
- Fig. 23: eine Ansicht wie in Fig. 22, wobei Umlenkrollen des Separatorpufferspeichers zum Nachführen des Vorrats des Separators aus dem Weg der Trenn- und Halteeinrichtung gefahren sind;
- Fig. 24: eine Ansicht wie in Fig. 23, wobei eine Querbewegung der Trenn- und Halteeinrichtung zum Anlegen des freien Endes der Separatorbahn an den Zellstapel dargestellt ist;
- Fig. 25: eine Ansicht vergleichbar zu Fig. 1, um die Lage einer Stoßkante bzw. eines Klebestreifens auf dem Zellstapel 10 zu verdeutlichen;
- Fig. 26: eine schematische Ansicht des Zellstapels mit dem Trenngreifer und einer Positionier- und Fixiereinheit zum Positionieren und Fixieren eines Endes des Separators an dem Zellstapel, wobei die Positionier- und Fixiereinheit in der Grundposition dargestellt ist;
- Fig. 27: eine Ansicht wie Fig. 26, wobei die Positionier- und Fixiereinheit beim Abrollen des Separators gezeigt ist;
- Fig. 28: eine Ansicht wie Fig. 26, wobei die Positionier- und Fixiereinheit beim Andrücken eines Fixiermittels, insbesondere eines Klebestreifens, zum Fixieren des Endes gezeigt ist;
- Fig. 29: eine perspektivische Ansicht einer konkreten möglichen Ausführungsform des Trenngreifers beim Überführen des Zellstapels vom Stapeln zum Wickeln;
- Fig. 30: eine weitere perspektivische Ansicht des Trenngreifers; und
- Fig. 31: eine Draufsicht auf den Trenngreifer.

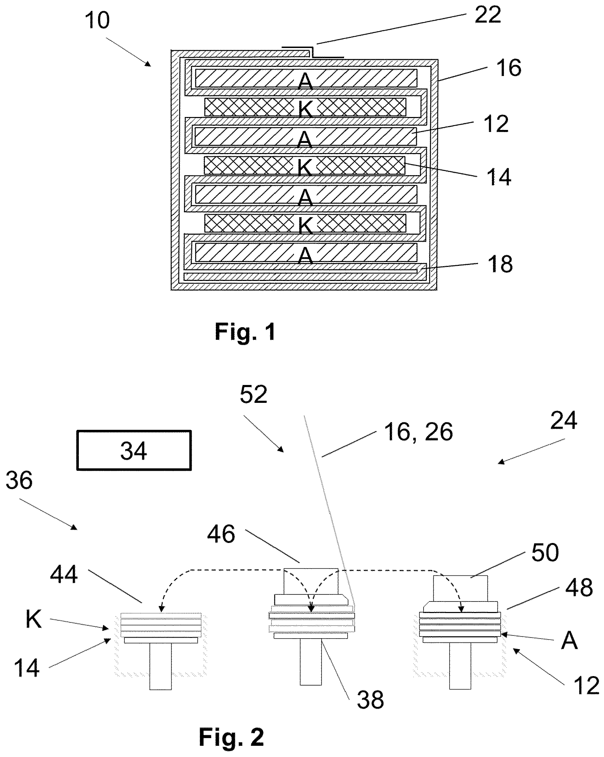

In Fig. 1 ist ein z-gefalteter und umwickelter Zellstapel 10 für eine Batterie dargestellt. Der Zellstapel 10 weist erste Zellkomponenten 12 und zweite Zellkomponenten 14 auf, die wechselweise aufeinandergestapelt sind und mittels eines z-förmig oder mäanderförmig um die Zellkomponenten 12, 14 gefalteten Separators 16 voneinander getrennt sind. Der durch eine Separatorbahn 26 gebildete Separator 16 ist in Fig. 1 um die links dargestellten Enden oder Kanten der ersten Zellkomponente 12 und um die rechts dargestellten Enden oder Kanten der zweiten Zellkomponente 14 gefaltet. Die Zellkomponenten 12, 14 sind beispielsweise Elektroden; bei einigen Ausführungsformen sind die ersten Zellkomponenten 12 Anoden A und die zweiten Zellkomponenten Kathoden K. Wie man Fig. 1 entnehmen kann, haben bei der dargestellten Ausführungsform die Anoden A und Kathoden K unterschiedliche Dimensionen in der Richtung der Erstreckung des Separators 16.

Der Separator 16 hat hier unterhalb der untersten Elektrode A eine Leerfalte 18. Weiter ist der Separator 16 noch einmal um den gesamten Stapel aus Zellkomponenten 12, 14 gewickelt. Ein freies Ende 20 des Separators 16 ist mittels eines geeigneten Fixierungsmittels wie z.B. eines Klebestreifens 22 fixiert.

Die Herstellung des in Fig. 1 dargestellten Zellstapels erfolgt durch Z-Falten.

Das Z-Falten stellt einen der Hauptprozesse zur Herstellung von Zellstapeln 10 für die Batteriezellassemblierung dar. Weitere Prozesse sind bspw. das Laminatstapeln von Monozellen, das Wickeln oder das Einzelblattstapeln.

Beim Z-Falten werden abwechselnd Zellkomponenten 12, 14 wie Anoden A und Kathoden K übereinandergelegt.

Die isolierende Schicht bildet dabei der Separator 16, der in diesem Prozess als Endlosmaterial - Separatorbahn 26 -immer zwischen den Lagen platziert wird. Dabei wird der Separator 16 immer um die einzelnen Elektroden A, K geschlagen, so dass er Z-förmig im Zellstapel 10 verläuft.

Nachdem mittels abwechselnden Stapelns der Elektroden A, K die gewünschte Lagenanzahl im Zellstapel 10 erreicht wurde, wird der Separator 16 abschließend noch um den gesamten Zellstapel 10 gewickelt. Dadurch wird sichergestellt, dass der gesamte Zellstapel 10 vorfixiert wird. Hierzu ist es vorgesehen, dass der Separator 16 während dem Wickeln mit einer konstanten und definierten Bahnspannung zugeführt wird. Nachdem der Separator 16 aufgewickelt wurde, wird dieser abgetrennt und das Ende 20 auf dem Zellstapel 10 mit einem Klebestreifen 22 fixiert.

Aufgrund des Zelldesigns und der Zellfunktion ist es zudem bei den hier in Rede stehenden Zellstapeln 10 gewünscht, dass der komplette Separator 16 aus einer Bahn stammt. Daher erfolgt das Stapeln und Wickeln bei den hier dargestellten Ausführungsformen von Vorrichtung und Verfahren zur Herstellung mit einem durchgängigen Separator 16.

Je nach Stapel- und Wickelrichtung kann es zudem gewünscht sein, eine Leerfalte 18 einzuplanen. Diese befindet sich entweder wie in Fig. 1 dargestellt unterhalb der ersten Lage oder über der letzten Lage.

In Fig. 1 ist der Zellstapel 10 nach dem Wickeln und mit aufgebrachtem Klebestreifen 22 dargestellt.

Im Folgenden werden besondere Eigenschaften von Ausführungsformen einer Vorrichtung 24 zum Herstellen des z-gefalteten und umwickelten Zellstapels 10 erläutert. Insbesondere handelt es sich bei der Vorrichtung 24 um eine Stapelanlage für die Großserie zur Fertigung von Batteriezellen. Dabei stehen neben den prozesstechnischen Herausforderungen auch weitere Gesichtspunkte im Vordergrund.

Insbesondere steht bei Ausführungsformen der Vorrichtung 24 und eines insbesondere mit der Vorrichtung 24 durchführbaren Verfahrens zur Herstellung eine schnelle Produktion im Vordergrund. Wirtschaftliche Anlagen und Prozesse sollen sehr geringe Taktzeiten aufweisen; dem wenden sich Ausführungsformen der Erfindung zu. Bei einigen besonders bevorzugten Ausführungsformen wird außerdem Augenmerk auf den Footprint der Anlage in der Zellfertigung gelegt.

Zur Reduzierung von Taktzeiten werden bei der Vorrichtung 24 und dem Verfahren Einzelprozesse parallelisiert. Dies setzt allerdings voraus, dass die Einzelprozesse auch unabhängig voneinander stattfinden können.

Die Herausforderung bei den beiden Prozessen "Stapeln" und "Wickeln" liegt darin, dass der Separator 16 innerhalb eines Zellstapels nicht getrennt werden soll. Dies wird mit Vorrichtungen 24 und Verfahren gemäß Ausführungsformen der Erfindung erreicht.

Mit dem beschriebenen Verfahren ist es möglich, die Taktzeiten im Vergleich zu Standardverfahren stark zu minimieren (<50%).

Besonders bevorzugte Ausführungsformen der Vorrichtung 24 und des Verfahrens wenden sich einem weiteren gewünschten Aspekt in der Zellfertigung zu, dem Footprint. Aufgrund der eingesetzten Materialien erfolgt die Produktion von Zellstapeln 10 in der Regel in Sauber- bzw. Trockenräumen. Hierfür wird die Umgebungsluft konditioniert, so dass in den Produktionshallen eine definierte Lufttemperatur und eine definierte relative Luftfeuchte (< 0,1%) vorliegen. Nachdem die Konditionierung nur mit einem sehr hohen energetischen Aufwand möglich ist, versucht man die Produktionsbereiche möglichst klein zu bauen. Somit spielt der Footprint der Maschinenanlage bei der Zellfertigung eine noch entscheidendere Rolle als in anderen Industriebereichen.

Mit dem nachfolgend beschriebenen Verfahren zum Stapeln, Wickeln und Trennen der Separatorbahn 26 sollen die Herausforderungen mit Fokus auf Taktzeit und Prozesssicherheit gelöst werden. Bei bevorzugten Ausgestaltungen werden auch die Herausforderungen hinsichtlich Bauraums bzw. Footprints gelöst. Der Fokus liegt dabei im Detail nicht auf der detaillierten Konstruktion, sondern auf dem grundlegenden Verfahren.

Bei bevorzugten Ausführungsformen der Vorrichtung 24 und des Verfahrens ist vorgesehen, dass während des gesamten Prozesses die Klemmung des Zellstapels 10 zu keiner Zeit gelöst wird, um sicherzustellen, dass die einzelnen Lagen nicht verrutschen können. Dies gilt auch für die Übergabe des Zellstapels 10 von einem Prozessteil zum Nächsten.

Eine Besonderheit der nachfolgend beschriebenen Ausführungsformen der Vorrichtung 24 und des Verfahrens ist das Parallelisieren des Stapelvorgangs und des nach dem Stapelvorgang erfolgenden Wickelns ("Wrapping"). Durch einen Separatorpufferspeicher 28 wird ein Vorrat 56 des Separators 16 angelegt, der beim Wickeln nach dem Z-Falten verwendet wird. Anschließend wird die Separatorbahn 26 mittels eines Trenngreifer 32 getrennt. Danach kann für den nächsten Zellstapel 10 mit dem Stapelvorgang des Z-Faltens begonnen werden, während gleichzeitig der vorangehend gestapelte Zellstapel 10 gewickelt werden kann ("Wrapping").

Vorteile besonders bevorzugter Ausführungsformen der Vorrichtung 24 und des Verfahrens sind:
- Parallelisierung von Stapeln und Wickeln und somit große Taktzeitreduzierungen für die Großserienproduktion
- Reduzierung des Bauraums durch übereinander angeordnete Einheiten
- Speicherung von großen Bahnlänge auf kleinen Bauraum durch spezielles Bahnführungskonzept
- Variable Bahnspannung über mechanische oder pneumatische Feder einstellbar
- Hohe Stapelgenauigkeit durch durchgängige Klemmung des Zellstapels

Das Gesamtverfahren zur Herstellung des z-gefalteten und umwickelten Zellstapels 10 wird nachfolgend anhand der Fig. 2 bis 31 beschrieben. Zudem werden auch die entsprechenden Konstruktionen der Einheiten der Vorrichtung 24 zum Herstellen des z-gefalteten und umwickelten Zellstapels 10 erläutert.

Die Vorrichtung 24 weist eine in Fig. 2 angedeutete elektronische Steuerung 34 mit entsprechendem Computerprogramm auf. Die Steuerung 34 ist dazu ausgebildet, die einzelnen im Folgenden näher erläuterten Einrichtungen/Einheiten oder Stationen der Vorrichtung 24 zum Durchführen des im Folgenden ebenfalls näher erläuterten Verfahrens anzusteuern. Das Computerprogramm enthält die entsprechenden Anweisungen hierzu.

Die Vorrichtung 24 weist eine Stapeleinrichtung 36 auf, von der ein Ausführungsbeispiel in Fig. 2 bis 7 dargestellt ist. Die Stapeleinrichtung 36 weist einen Stapeltisch 38 (Beispiel für Unterlage) und Halteelemente 40 mit ersten und beabstandeten zweiten Niederhaltefingern 42a,42b zum Niederhalten der gestapelten Zellkomponenten 12, 14 während des Z-Faltens des Separators 16 auf. Es sind jeweils wenigstens ein Niederhaltefinger 42a, 42b pro Eckbereich, also insgesamt wenigstens vier Niederhaltefinger 42a, 42b vorgesehen, die in im Wesentlich zu der Oberfläche des Stapeltischs 38 paralleler Richtung zum Zustellen und Wegführen und in im Wesentlichen zu der Oberfläche des Stapeltischs 38 senkrechter Richtung zum Klemmen und Nachfahren in der Höhe bewegbar sind. Bei einigen Ausführungsformen werden die Niederhaltefinger 42a, 42b unter einem leichten Winkel angestellt, damit keine Relativbewegung auf dem Zellstapel entsteht. Somit können die Niederhaltefinger 42a, 42b auch schräg zur Oberfläche des Stapeltischs 38 bewegbar sein.

Weiter weist die Stapeleinrichtung 36 der dargestellten Ausführungsform ein Kathodenmagazin 44, einen zwischen dem Kathodenmagazin 44 und dem Stapeltisch 38 zum Liefern von Kathoden K hin- und her fahrbaren Kathodengreifer 46, ein Anodenmagazin 48 und einen zwischen dem Anodenmagazin 48 und dem Stapeltisch 38 zum Liefern von Anoden K hin- und her fahrbaren Anodengreifer 50 auf. Durch die Magazine 44, 48 werden die ersten und zweiten Zellkomponenten 12, 14 bereitgestellt.

Weiter umfasst die Stapeleinrichtung 36 eine Separatorbahneinfügeeinrichtung 52 zum z-förmigen oder mäanderförmigen Einfügen der Separatorbahn 26 zwischen den Zellkomponenten 12, 14. Durch die Separatorbahneinfügeeinrichtung 52 wird die Separatorbahn 26 zum Einfügen bereitgestellt. Durch ein jeweils von unterschiedlichen Seiten erfolgendes seitliches Einführen der Greifer 46, 50 mit den Zellkomponenten 12, 14 ist die Separatorbahneinfügeeinrichtung 52 weiter dazu ausgebildet, die Separatorbahn z-förmig oder mäanderförmig um die Zellkomponenten 12, 14 zu falten.

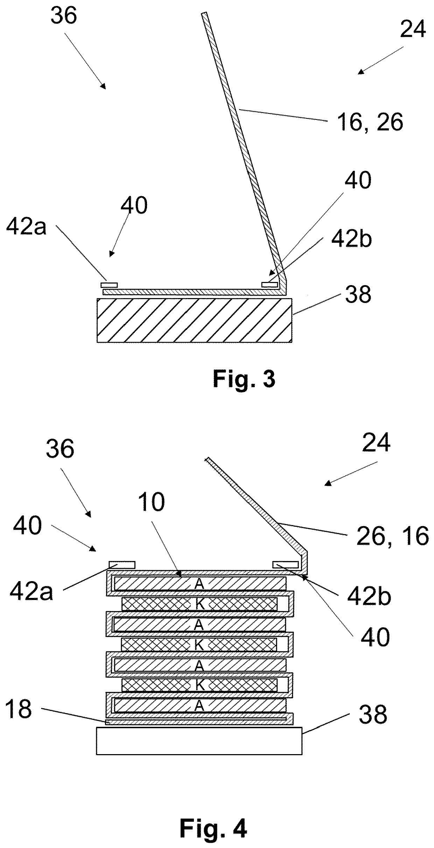

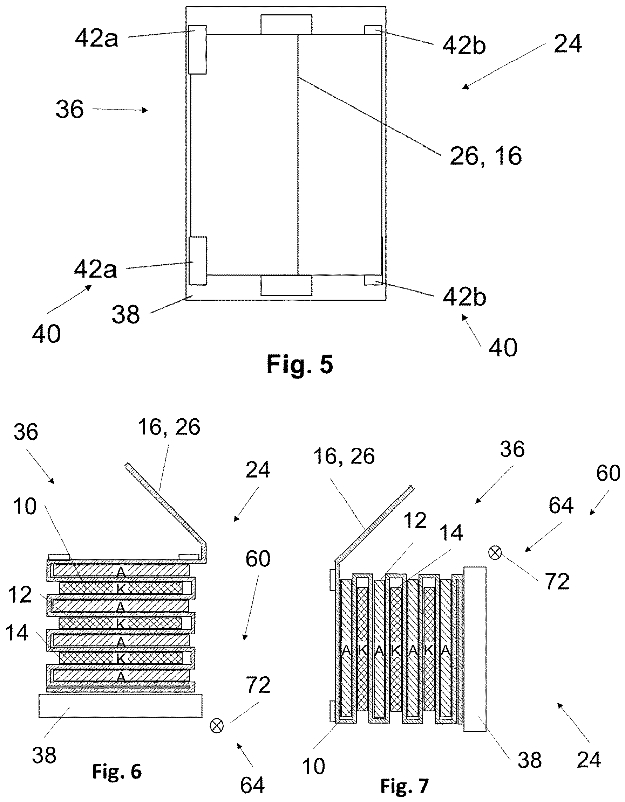

In Fig. 2 bis 5 ist das mittels der Stapeleinrichtung 36 durchführbare Stapelverfahren schematisch dargestellt. Das Stapelverfahren umfasst:
a) Bereitstellen der ersten und zweiten Zellkomponenten 12, 14 in Form der Anoden und Kathoden A, K und Bereitstellen der Separatorbahn 26 und
b) Erzeugung des Zellstapels 10 durch abwechselndes Auflegen der Anoden A und Kathoden K von beiden Seiten (siehe Fig. 2).
   In Bezug auf die Darstellungen in Fig. 2 bis Fig. 5 werden zum Erzeugen des Zellstapels 10 (Schritt b)) insbesondere folgende Schritte durchgeführt:
   b1) Auf dem Stapeltisch 38 wird vor der ersten Lage der Separator 16 über Niederhaltefinger 42a, 42b fixiert. Die Separatorbahn 26 wird dabei von der rechten Seite von oben zugeführt (siehe Fig. 3).
   b2) Anschließend wird die erste Anode A von rechts eingelegt, auf dem Stapeltisch 38 positioniert und dann über die ersten Niederhaltefinger 42a auf der linken Seite des Stapeltisches 38 festgehalten. Dabei wird zeitgleich die Leerfalte 18 erzeugt, da der Separator 16 von rechts nach links umgeschlagen wird. Hinweis: Die Anordnung Anode/Kathode A/K links oder rechts und entsprechend Leerfalte 18 unten/oben wird in Abhängigkeit des Zelldesigns definiert.
   b3) Sobald die Anode A fixiert wurde, wird diese vom Anodengreifer 50 gelöst und dieser fährt wieder zum Anodenmagazin 48 zurück.
   b4) Anschließend fährt von der linken Seite der Kathodengreifer 46 mit einer Kathode K ein.
   b5) In der Einfahrbewegung wird der Separator 16 nach rechts geschoben, wobei er über die beiden ersten Niederhaltefinger 42a am Stapeltisch 38 umgeschlagen wird.
   b6) Ist die Kathode K abgelegt, so wird diese über zwei zweite Niederhaltefinger 42b, in der Darstellung der Fig. 2 bis 4 auf der rechten Seite des Stapeltischs 38 fixiert.
   b7) Anschließend werden die ersten Niederhaltefinger 42a auf der linken Seite horizontal aus der Separatorfalte, die beim Umschlagen entstanden ist, herausgezogen.
   b8) Nun fährt der Kathodengreifer 46 wieder in die Grundstellung und holt die nächste Kathode K aus dem Kathodenmagazin 46. Zeitgleich führt der Anodengreifer 50 die nächste Anode A zu.
   b9) Die Prozessschritte b3) - b8) werden nun so oft wiederholt, bis die gewünschte Lagenanzahl erreicht wurde.
   b10) Als letzte Lage wird bei der dargestellten Ausführung immer eine Anode A auf dem Stapel abgelegt (dies hängt wie oben erwähnt vom Zelldesign ab).
   b11) Nachdem diese letzte Lage abgelegt und über die ersten Niederhaltefinger 42a fixiert wurde, wird nochmals der Separator 16 über den Kathodengreifer 46 umgeschlagen, jedoch ohne dabei eine Kathode K abzulegen.
   b12) Abschließend werden alle vier Niederhaltefinger 42a, 42b auf der Stapeloberseite platziert, so dass sie den Zellstapel 10 fixieren (siehe Fig. 4 und Fig. 5).

In der Fig. 3 bis 5 ist der Zellstapel 10 schematisch, sowie die Gesamtsituation zu Beginn und nach dem Schritt b12) dargestellt. Zu betonen ist dabei die Seite, auf der der durchgehende Separator 16 jeweils von den Niederhaltefingern 42a, 42b fixiert wird. Zudem wird der Zellstapel 10 auf dem Stapeltisch 38 in die Höhe aufgebaut, das bedeutet auch, dass die Niederhaltefinger 42a, 42b "mitwachsen" müssen, d.h. mit anderen Worten in der vertikalen Richtung entsprechend nachgefahren werden.

Im Folgenden wird der weitere Aufbau der Vorrichtung anhand der Fig. 6 bis 31 erläutert.

Die Vorrichtung 24 weist als weitere Einheit eine Wickeleinrichtung 54 zum Wickeln der Separatorbahn 26 um den durch die Stapeleinrichtung 36 gestapelten Zellstapel 10 auf, die hiernach noch näher beschrieben wird.

Bei den dargestellten Ausführungsformen weist die Vorrichtung 24 weiter den Separatorpufferspeicher 28 zum Zwischenspeichern eines zum Wickeln in der Wickeleinrichtung 54 zu verwendenden Vorrats 56 der Separatorbahn 26 in Form eines Längenabschnitt 58 der Separatorbahn 26 auf.

Weiter weist die Vorrichtung 24 bei den dargestellten Ausführungsformen eine Überführungseinrichtung 60 zum Überführen des Zellstapels von der Stapeleinrichtung 36 zu der Wickeleinrichtung 54 auf.

Weiter weist die Vorrichtung 24 eine Trenn- und Halteeinrichtung 62 zum Trennen der Separatorbahn 26 an einem in Förderrichtung der Separatorbahn 26 hinteren Ende 20 eines zum Wickeln um den Zellstapel 10 zu verwendenden Vorrats 56 der Separatorbahn 26 und zum Halten der Trennstelle 64 an dem hinteren Ende 20 auf. Die Trenn- und Halteeinrichtung 62 weist den Trenngreifer 32 auf.

Zur Verringerung der Hallenfläche, die durch die Vorrichtung 24 eingenommen wird und somit zur Verringerung des Footprints sind bei bevorzugten Ausgestaltungen der Vorrichtung 24 die Stapeleinrichtung 36 und die Wickeleinrichtung 54 zumindest teilweise räumlich übereinander angeordnet und mehr bevorzugt insgesamt räumlich übereinander angeordnet.

Die Überführungseinrichtung 60, die im Folgenden anhand der Fig. 6 bis 10 näher erläutert wird, ist dazu eingerichtet, den Zellstapel 10 aus einer Stapellage mit zum Stapeln im Wesentlichen horizontal ausgerichteten Zellkomponenten 12, 14 in eine Überführungslage mit im Wesentlichen vertikal ausgerichteten Zellkomponenten 12, 14 zu kippen. Weiter ist die Überführungseinrichtung 60 dazu eingerichtet, die Separatorbahn 26 beim Überführen des Zellstapels 10 von der Stapeleinrichtung 36 zu der Wickeleinrichtung 54 nachzuziehen.

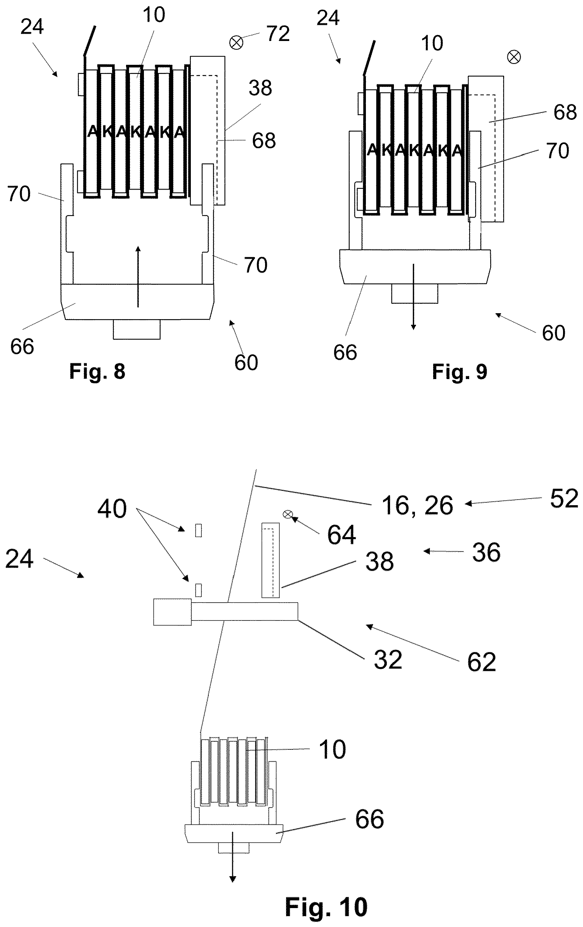

Dabei zeigt Fig. 6 eine Frontansicht der Stapeleinrichtung 36 mit der Position des Zellstapels 10 nach dem Stapelprozess und vor einem Schwenken der hier als Stapeltisch 38 ausgebildeten Unterlage der Stapeleinrichtung 36. Fig. 7 zeigt die Frontansicht von Fig. 6 nach dem zur Übergabe des Zellstapels 10 erfolgenden Schwenken des Stapeltischs 38. Fig. 8 zeigt eine Frontansicht des gekippten Stapeltischs 38 mit dem Zellstapel 10 zusammen mit einem Übergabegreifer 66 der Überführungseinrichtung 60 beim Einführen des Übergabegreifers 66. Fig. 9 zeigt einen weiteren Unterschritt der Übergabe des Zellstapels 10 von der Stapeleinrichtung 36 zu der Wickeleinrichtung 54, wobei der Übergabegreifer 66 zum Klemmen des Zellstapels 10 geschlossen ist. Und Fig. 10 zeigt den Übergabegreifer 66 in einer unteren Endlage, um ein Absenken des Übergabegreifers 66 durch den Trenngreifer 32 hindurch mit gleichzeitigem Nachziehen eines Separators 16 darzustellen.

Die Überführungseinrichtung 60 weist eine Schwenkeinrichtung 64 zum Schwenken des Stapeltischs 38 aus der horizontalen Lage in eine vertikale Lage und den Übergabegreifer 66 auf. Der Übergabegreifer 66 weist mehrere aufeinander zu und voneinander weg bewegbare Greiferfinger 70 auf, mittels denen der Zellstapel 10 beim Überführen geklemmt werden kann, um somit die Zellkomponenten 12, 14 in ihrer Lage in dem Zellstapel 10 festzuhalten.

Der Stapeltisch 38 weist eine Ausnehmung auf, die ein Eingreifen des Übergabegreifers 66 ermöglicht. Insbesondere ist die Ausnehmung als Greifernut 68 ausgebildet, in die entsprechende Greiferfinger 70 des Übergabegreifers 66 eingreifen können.

Im Folgenden wird anhand der Fig. 6 bis 10 die Funktion der Überführungseinrichtung 60 näher erläutert. Die Überführungseinrichtung 60 ist zum Durchführen des folgenden Schritts c) des Verfahrens zur Übergabe des Zellstapels 10 vom Stapeltisch 38 ausgebildet:
c) Überführen des Zellstapels 10 von der Stapeleinrichtung 34 zu der Wickeleinrichtung 54.

Insbesondere weist bei einer Ausführungsform des Verfahrens der Schritt c) die folgenden Schritte (in der angegebenen Reihenfolge) auf:
c0) Nach Abschluss des Stapelprozesses wird der Zellstapel 10 über alle (hier vier) Niederhaltefinger 42a, 42b geklemmt, wie dies in Fig. 4 und 5 und Fig. 6 gezeigt ist.
c1) Anschließend erfolgt ein Kippen des Zellstapels 10 von der Stapellage mit zum Stapeln im Wesentlichen horizontal ausgerichteten Zellkomponenten 12, 14 in eine Überführungslage mit im Wesentlichen vertikal ausgerichteten Zellkomponenten 12, 14, wie dies in Fig. 6 und 7 gezeigt ist. Bei der dargestellten Ausführungsform wird hierzu anschließend an das Klemmen von Schritt c0) der Stapeltisch 38 inklusive der vier Niederhaltefingern 42a, 42b um die Längsachse der Elektroden A, K (genauer: eine zu den Längsachsen der Elektroden A, K parallele Drehachse 72) nach unten geschwenkt. Bei der dargestellten Ausführungsform ist die Schwenkeinrichtung 64 zum Schwenken des Stapeltischs 38 um eine seitlich angeordnete Drehachse 72 ausgebildet. Die Schwenkbewegung erfolgt in der Vorrichtung 24 (Stapelanlage) gemäß der dargestellten Ausführung gegen den Uhrzeigersinn, kann aber auch gespiegelt aufgebaut werden. Hinweis: Bei Sonderzellformaten kann sich ein Ableiter der oder einer der Zellkomponenten 12, 14 auch auf der langen Seite der Zelle befinden, so dass dann entsprechend um die kurze Seite geschwenkt wird. Die Schwenkachse bzw. Drehachse 72 liegt bei den dargestellten Ausführungen immer parallel zu einer der beiden "Faltachsen" des Separators 16.
c1a) Nun kann die Übergabe des Zellstapels 10 vom Stapeltisch 38 erfolgen. Hierfür fährt der Übergabegreifer 66 von unten nach oben und greift den Zellstapel 10 auf dem Stapeltisch 38, siehe Fig. 8 und 9.
c1b) Die Greiferfinger 70 sind so ausgeführt, dass die Niederhaltefinger 42a, 42b übergriffen werden. Somit kann der Zellstapel 10 mit den Greiferfingern 70 geklemmt werden, die Niederhalterfinger42a, 42b können seitlich herausgezogen werden, und anschließend kann der Zellstapel 10 nach unten gezogen werden, siehe Fig. 9 und 10.
c2) Beim Herunterziehen des Zellstapels 10 wird der Separator 16 von oben (aus der Materialzuführung der Separatorbahneinfügeeinrichtung 52) nachgezogen. Der Separator 16 wird dabei am geschwenkten Stapeltisch 38 vorbeigeführt. Zudem taucht der Übergabegreifer 66 von unten nach oben durch den Trenngreifer 32 für den Separator 16 hindurch. Der Trenngreifer 32 dient zum Durchtrennen der Separatorbahn 26 vor dem nächsten Stapelprozess (vgl. Fig. 10).

Nun befindet sich der Zellstapel 10 in Übergabeposition zur Wickeleinrichtung 54.

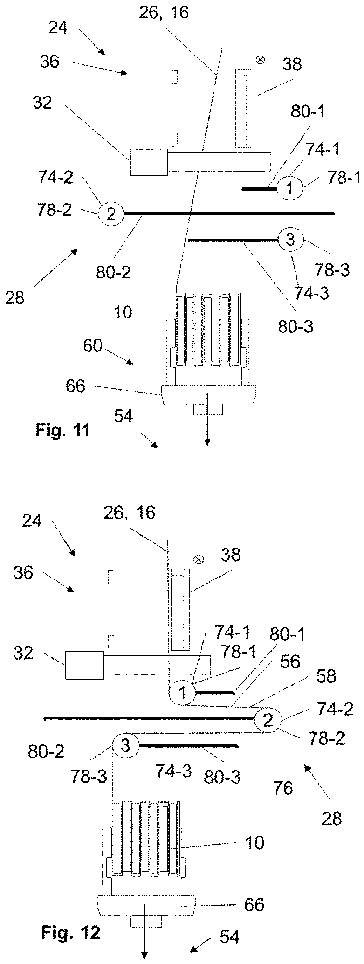

Bevor der Wickelprozess (Schritt f) des Verfahrens) gestartet wird, wird in einem Schritt d) ein in Schritt f) zum Wickeln benötigter Längenabschnitt 58 der Separatorbahn 26 in dem Separatorpufferspeicher 28 bereitgestellt. Hierzu wird, bevor der Wickelprozess gestartet wird, das Puffersystem befüllt, das im Folgenden näher anhand der Fig. 11 und 12 erläutert wird.

Fig. 11 zeigt eine Anfangssituation zum Befüllen des Separatorpufferspeichers 28. Der Separatorpufferspeicher 28 ist leer. Fig. 12 zeigt eine Fig. 11 vergleichbare Darstellung bei befülltem Separatorpufferspeicher 28.

Der Separatorpufferspeicher 28 ist zwischen der Stapeleinrichtung 36 und der Wickeleinrichtung 54 angeordnet. Der Separatorpufferspeicher 28 weist relativ zueinander bewegliche Umlenkrollen 74-1, 74-2, 74-3 zum Aufbau wenigstens einer Schleife 76 der Separatorbahn 26 als Vorrat 56 auf.

Um die beiden Prozesse b) Stapeln und f) Wickeln zeitlich voneinander entkoppeln zu können, wird in das Verfahren und die Vorrichtung 24 ein Materialspeicher - hier der Separatorpufferspeicher 28 - integriert. Gemäß der in Fig. 11 und 12 dargestellten Ausführungsform besteht der Separatorpufferspeicher 28 im Wesentlichen aus drei (oder mehr) Walzen 78-1, 78-2, 78-3 als Umlenkrollen 74-1, 74-2, 74-3, die vorzugsweise jeweils horizontal verschoben werden können. Bei einigen Ausführungsformen können die oder wenigstens eine der Walzen 78-1, 78-2, 78-3, insbesondere die obere Umlenkwalze 78-1 auch geschwenkt werden. Die obere und untere Walze 78-1, 78-3 dienen dabei als Umlenkwalzen, die mittlere Walze 78-3 als Speicherwalze. Die in Fig. 11 dargestellten Grundstellungen der Walzen 78-1, 78-2, 78-3 sind dabei so definiert, dass der Übergabegreifer 66 daran vorbeifahren kann. Gemäß Fig. 11 sind hierzu die Umlenkwalzen 78-1, 78-3 auf einer Seite, hier rechts dargestellt, und die Speicherwalze auf der anderen Seite, hier links dargestellt, angeordnet. Weiter sind in Fig. 11 und 12 auch Verschiebeführungen 80-1, 80-2, 80-3 zur durch die Steuerung 34 angesteuerten Verschiebung der Umlenkrollen 74-1 - 74-3 bzw. Walzen 78-1 - 78-3 dargestellt.

Die Befüllung des Separatorpufferspeichers 28 erfolgt durch ein Aufziehen des Separators 16 über die drei Umlenkrollen 74-1 - 74-3. Je nach Zellformat und Anzahl der geforderten Umwicklungen kann ein entsprechender Längenabschnitt 58 mit entsprechender Bahnlänge in dem Separatorpufferspeicher 28 gespeichert werden.

In Fig. 11 ist die Grundstellung und in Fig. 12 ist die befüllte Stellung dargestellt. Hinweis: Der Separatorpufferspeicher 28 ist vorzugsweise derart ausgebildet, dass in der Grundstellung auch der Trenngreifer 32 nach unten verfahren kann, um die nachfolgend beschriebene vorteilhafte Ausgestaltung des Wickelprozesses (Schritt f)) auszuführen.

Demnach umfasst das Verfahren den folgenden Schritt d):
d) Bereitstellen eines in Schritt f) zum Wickeln benötigten Längenabschnitts 58 der Separatorbahn 26 in dem Separatorpufferspeicher 28.

Schritt d) umfasst vorzugsweise die Schritte:
d1) Bilden wenigstens einer Schleife 76 der Separatorbahn 26 mittels relativ zueinander beweglichen Umlenkrollen 74-1 - 74-3 als Vorrat 56 zum Wickeln in Schritt f); und
d2) Aufbau des Vorrats 56 der Separatorbahn 26 zum Wickeln in Schritt e), wobei Schritt d2) zeitlich und/oder räumlich zwischen Schritt b) und Schritt f) durchgeführt wird.

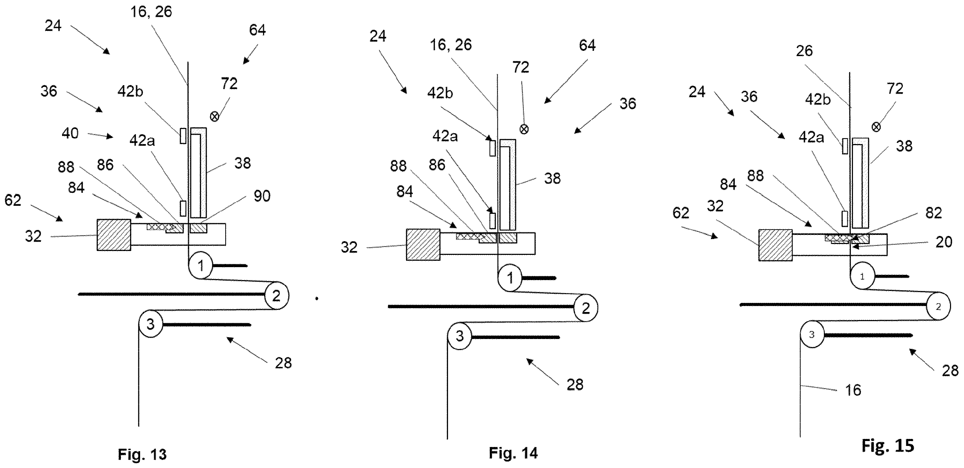

Weiter umfasst das Verfahren gemäß der hier dargestellten Ausführungsform den im Folgenden anhand der Fig. 13 bis 16 näher erläuterten, mittels der Trenn- und Halteeinrichtung 62 durchzuführenden Schritt:
eb) Trennen des Separators 16 und Start eines neuen Stapelvorganges.

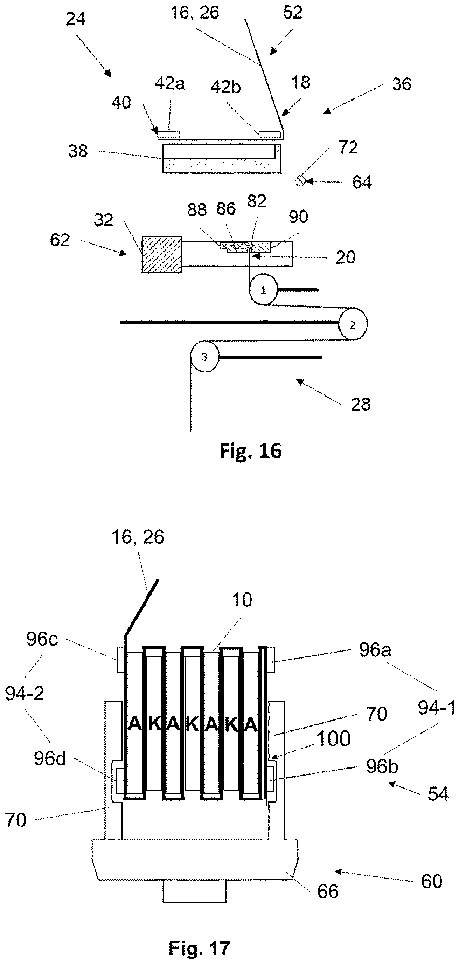

Dabei zeigt Fig. 13 eine Frontansicht der Stapeleinrichtung 36, der Trenn- und Halteeinrichtung 62 und des Separatorpufferspeichers 28 der Vorrichtung 24 zu Beginn des Schritts eb) des Trennens des Separators 16 bei befülltem Separatorpufferspeicher 28. Fig. 14 zeigt eine Ansicht wie in Fig. 13 kurz vor dem eigentlichen Trennen, wobei der Separator 16 in Förderrichtung des Separators 16 gesehen vor einer Trennstelle 82 mit der Trenn- und Halteeinrichtung und nach der Trennstelle 82 mit den Niederhaltefingern 42a, 42b der Halteelemente 40 der Stapeleinrichtung 36 geklemmt ist. Fig. 15 zeigt eine Ansicht wie in Fig. 14, wobei der Separator 16 mittels der Trenn- und Halteeinrichtung 62 an der Trennstelle 82 getrennt wird. Und Fig. 16 zeigt eine Ansicht wie in Fig. 15, wobei die Stapeleinrichtung 36 in eine Stapelstellung zum Stapeln eines neuen Zellstapels überführt ist und ein neuer Stapelvorgang gestartet wird. Hierzu wird der Stapeltisch 38 mittels der Schwenkeinrichtung 64 um die Drehachse 72 in die horizontale Stapelstellung zurückgeschwenkt. Dabei ist der Separator 16 bereits wie oben zu Fig. 3 ausgeführt mittels der Haltefinger 42a, 42b geklemmt, so dass der Stapelvorgang des neuen Zellstapels 10 wie zuvor anhand der Fig. 2 bis 5 ausgeführt sofort begonnen werden kann.

Demnach umfasst Schritt e) bei dem hier dargestellten Verfahren den Schritt:
e) Durchtrennen der Separatorbahn 26 am in Förderrichtung hinteren Ende 20 des Längenabschnitts 58 oder Vorrats 56 und Festhalten der Trennstelle 82 im Bereich des hinteren Endes 20 mittels des Trenngreifers 32.

Die Trenn- und Halteeinrichtung 62 ist demnach zum Halten der Trennstelle 82 an dem hinteren Ende 20 ausgebildet. Die Trenn- und Halteeinrichtung 62 ist weiter zum Nachführen der gehaltenen Trennstelle 82 beweglich. Der Trenngreifer 32 ist hierzu mittels nicht näher dargestellter, wie alle hier erläuterten Einheiten durch die Steuerung 34 ansteuerbaren Aktoren beweglich und weist eine Schneideinrichtung 84 zum Durchtrennen der Separatorbahn 26 und Greifelemente, insbesondere in Form einer Klemmleiste 86 mit Gegenlagerung 90, zum Halten der Separatorbahn 26 sowie des an der Trennstelle 82 abgeschnittenen Endes 20 der Separatorbahn 26 auf.

Die Funktion der Trenn- und Halteeinrichtung 62 sowie eine bevorzugte Ausgestaltung des Schritts eb) des Trennens des Separators und des Starts des neuen Stapelvorganges werden im Folgenden erneut unter Bezug auf die Fig. 13 bis 16 erläutert.

Nachdem der Separatorpufferspeicher wie oben zu Fig. 11 und 12 ausgeführt befüllt wurde, kann über den Trenngreifer 32 die Separatorbahn 26 durchgeschnitten werden. Dies erfolgt bei den gezeigten Ausführungen so nah wie möglich am Stapeltisch 38, da das obere Ende (im neuen Zellstapel 10) bevorzugt sehr kurz sein sollte.

Hierzu fixiert der Trenngreifer 32 den Separator 16 unterhalb einer Schneide 88 der Schneideinrichtung 84 über die Klemmleiste 86. Diese Klemmleiste 86 wird über einen Pneumatikzylinder geschoben und läuft der Schneide 88 federnd gelagert voraus. Am oberen Ende wird der Separator 16 zudem über die Niederhaltefinger 42a, 42b fixiert, die für den Trennvorgang den Separator 16 auf dem Stapeltisch 38 klemmen. Der Schnitt erfolgt somit zwischen der Fixierung am Stapeltisch 38 durch die Niederhaltefinger 42a, 42b und der Klemmleiste 86 im Trenngreifer 32, sodass nach dem Schnitt beide lose Enden der Separatorbahn 26 weiterhin fixiert werden.

Nachdem der Schnitt ausgeführt wurde, wird das obere Ende der Separatorbahn 26 auf dem Stapeltisch 38 fixiert (mittels der Niederhaltefinger 42a, 42b), das untere Ende 20 wird im Trenngreifer 32 über die Klemmleiste 86 gehalten.

Parallel zum im Folgenden noch näher erläuterten Wickelprozess (Schritt f)) kann nun der Stapeltisch 38 wieder in die Horizontale geklappt werden und ein neuer Stapelvorgang begonnen werden.

In den Fig. 13 bis 16 sind die eben erwähnten Einzelschritte des Schritts eb) schematisch dargestellt

Anschließend erfolgt, während das Stapeln erneut für den nachfolgenden Zellstapel 10 durchgeführt wird, der Schritt f) des Umwickelns des zuvor gestapelten Zellstapels 10. Eine Ausführungsform des Schritts f) des Umwickelns und eine Ausführungsform der zum Durchführen des Schritts f) bei der Vorrichtung 24 vorgesehenen Wickeleinrichtung 54 werden im Folgenden anhand der Darstellung der Fig. 17 bis 25 näher erläutert.

Gemäß den Fig. 17 bis 25 weist die Wickeleinrichtung 54 wenigstens einen drehbaren Wickelgreifer 92 zum Greifen des Zellstapels 10 und zum Drehen des Zellstapels 10, um die Separatorbahn 26 darum zu wickeln, auf. Der Wickelgreifer 92 weist bei der dargestellten Ausführungsform wenigstens ein gabelförmiges Greifelement 94-1, 94-2 mit einer ersten und einer zweiten Zinke auf. Die einzelne Zinke wird im Folgenden als Wickelschwert 96a-96d bezeichnet. Bei der dargestellten Ausführungsform weist eine Wickeleinheit 93 der Wickeleinrichtung 54 ein erstes gabelförmiges Greifelement 94-1 mit einem ersten Zinkenpaar in Form eines ersten Wickelschwerts 96a und eines zweiten Wickelschwerts 96b und ein zweites gabelförmiges Greifelement 94-2 mit einem zweiten Zinkenpaar in Form eines dritten Wickelschwerts 96c und eines vierten Wickelschwerts 96d auf.

Weiter weist die Wickeleinrichtung 54 eine Bahnspanneinheit 98 zum Einstellen, Aufrechterhalten, Regeln und/oder Steuern der Bahnspannung der Separatorbahn 26 beim Wickeln auf.

Der Schritt f) des Wickelns umfasst gemäß bevorzugten Ausgestaltungen insbesondere die folgenden Unterschritte:
f1) Erfassen des Zellstapels mit dem Wickelgreifer 92.
f2) Drehen des Zellstapels, um die Separatorbahn darum zu wickeln, insbesondere mittels Drehens des Wickelgreifers 92.
f3) Einstellen, Aufrechterhalten, Regeln und/oder Steuern der Bahnspannung der Separatorbahn 26 beim Wickeln und/oder
f4) elastisches Spannen der Separatorbahn 26.
f5) Leeren des den Vorrat 56 der Separatorbahn 26 zum Wickeln enthaltenden Separatorpufferspeichers 28.
f6) Nachführen einer Halterung für die Trennstelle 82 der Separatorbahn, hier wird insbesondere die Trenn- und Halteeinrichtung 62 und mehr insbesondere der Trenngreifer 32 mit der die Trennstelle 82 klemmenden Klemmleiste 86 nachgeführt.

Im Einzelnen zeigt Fig. 17 eine Seitenansicht des noch von dem Übergabegreifer 66 gehaltenen Zellstapels 10 beim Übergeben an die Wickeleinrichtung 54, die die gabelförmigen Greifelemente 94-1, 94-2 mit den als Zinkenpaare angeordneten Wickelschwertern 96a-96d aufweist, wobei die gabelförmigen Greifelemente 94-1, 94-2 von hinten eingefahren sind. Aus Fig. 17 geht die Lage der Wickelschwerter 96a-96d zwischen Zellstapel 10 und Übergabegreifer 66 hervor. Die Greiferfinger 70 haben einen Übergriff 100, so dass die Wickelschwerter 96a-96d jeweils seitlich der Greifflächen der Greiferfinger 70 eingefahren werden können.

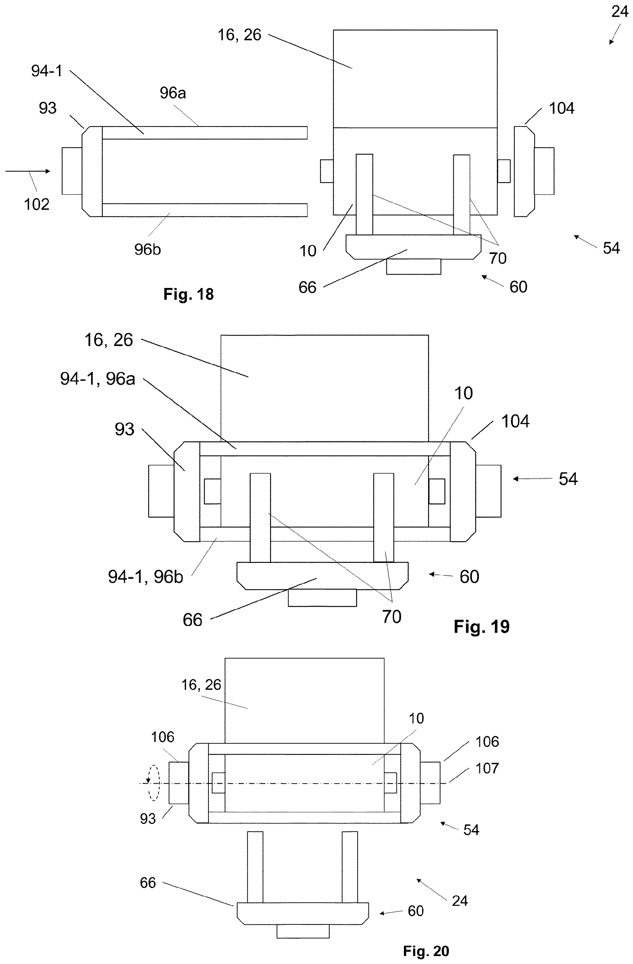

Fig. 18 zeigt eine Frontansicht der in Fig. 17 dargestellten Situation; die gabelförmigen Greifelemente 94-1, 94-2 fahren mittels einer Zustellachse 102 von der Seite horizontal ein, dabei stehen die Zinkenpaare - erstes und zweites Wickelschwert 96a, 96b sowie drittes und viertes Wickelschwert 96c, 96d - der gabelförmigen Greifelemente 94-1, 94-2 aber horizontal. Die gabelförmigen Greifelemente 94-1, 94-2 können gesteuert durch die Steuerung 34 aufeinander zu und voneinander weg bewegt werden. Fig. 18 zeigt eine Grundposition der Wickeleinheit 93 zur Aufnahme und Abgabe des Zellstapels 10. Weiter ist der Übergabegreifer 66 noch in Eingriff mit dem Zellstapel 10, um diesen zu klemmen. Außerdem ist eine mittels der Steuerung ansteuerbar einstellbare Klemmung 104 für die freien Enden der Wickelschwerter 96a-96d dargestellt.

Fig. 19 zeigt eine Ansicht wie in Fig. 18, wobei die gabelförmigen Greifelemente 94-1, 94-2 vollständig eingefahren und über die Klemmung 104 fixiert sind, um den Zellstapel 10 zwischen sich einzuklemmen. Fig. 19 zeigt die Arbeitsposition der Wickeleinheit 93.

Fig. 20 zeigt eine Ansicht wie in Fig. 19, wobei der Übergabegreifer 66 in seine Grundstellung überführt und somit von der Wickeleinheit 93 entfernt ist und wobei die Wickeleinrichtung 54 das Drehen des in nun in der Wickeleinheit 93 eingeklemmten Zellstapels 10 zum Umwickeln beginnt. Die Wickeleinheit 93 weist Drehlager 106 auf und ist um ihre in Fig. 20 horizontal verlaufende Mittelachse als Rotationsachse 107 drehend antreibbar. Wie oben bereits erwähnt sind alle Aktoren der Wickeleinrichtung 54 entsprechend durch die Steuerung 34 gesteuert.

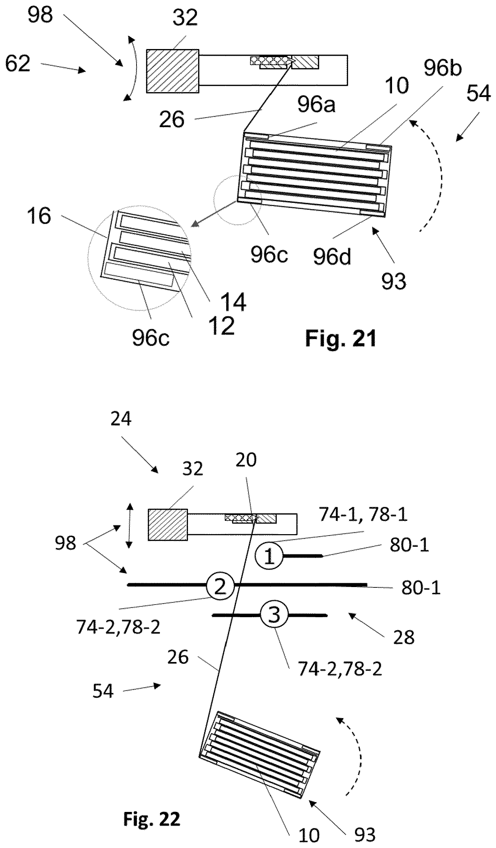

Fig. 21 zeigt eine Gesamtdarstellung und eine Detaildarstellung von der axialen Seite aus auf die Wickeleinrichtung 54 während des Drehens, wobei der Trenngreifer 32 mit dem daran gehaltenen Ende 20 der an der Trennstelle 82 abgetrennten Separatorbahn 26 nachgefahren wird. Dabei werden die Wickelschwerter 96a-96d eingewickelt.

Fig. 22 zeigt eine axiale Seitenansicht auf die sich drehende Wickeleinheit 93 während eines Freifahrens des Separatorpufferspeichers 28, der zusammen mit dem Trenngreifer 32 Elemente der Bahnspanneinheit 98 zur Aufrechterhaltung der Bahnspannung beim Wickeln bildet.

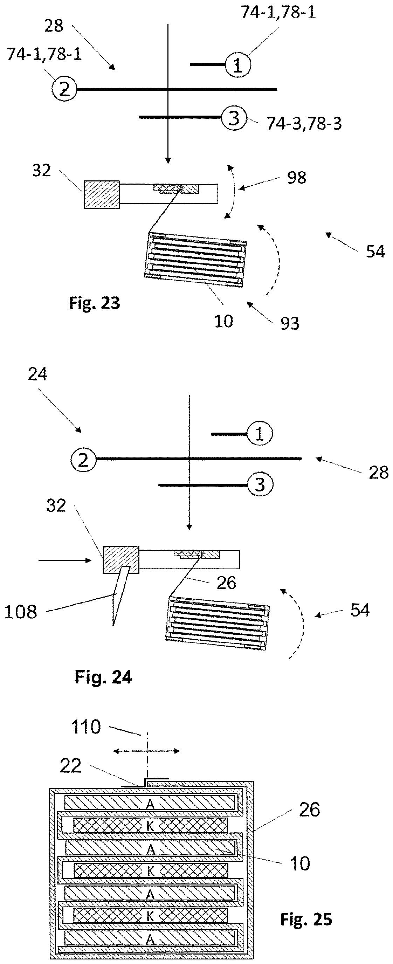

Fig. 23 zeigt eine Ansicht wie in Fig. 22, wobei die Umlenkrollen 74-1 - 74-3 des Separatorpufferspeichers 28 zum Nachführen des Vorrats 56 des Separators 16 aus dem Weg des Trenngreifers 32 gefahren sind.

Fig. 24 zeigt eine Ansicht wie in Fig. 23, wobei eine Querbewegung der Trenn- und Halteeinrichtung 62 zum Anlegen des freien Endes der Separatorbahn an den Zellstapel 10 dargestellt ist. Dabei wird eine Querbewegung des Trenngreifers 32 über eine Kurvenscheibe 108 oder über einen Aktor (nicht dargestellt) während des Absenkens des Trenngreifers 32 auf den Zellstapel 10 initiiert.

Fig. 25 zeigt eine Ansicht vergleichbar zu Fig. 1, um die Lage 110 der Stoßkante bzw. des Klebestreifens 22 auf dem Zellstapel 10 zu verdeutlichen. Die Querbewegung des Trenngreifers 32 wird entsprechend durchgeführt, um diese gewünschte Lage zu erreichen.

Im Detail wird der Schritt f) des Umwickelns des Zellstapels 10 wie folgt durchgeführt. Nachdem der Separator 16 getrennt wurde, kann der Wickelprozess hauptzeitparallel zum Stapelprozess des neuen Zellstapels 10 erfolgen. D.h. es kann auf dem Stapeltisch 38 nun wieder mit dem Stapelvorgang des Z-Faltens begonnen werden, wie auf oben zu Fig. 1 bis 6 beschrieben, und gleichzeitig wird gewickelt, wie nachfolgend beschrieben.

Hierfür wird der Zellstapel 10 vom Übergabegreifer 66 in die Wickeleinheit 93 übergeben. Die Greiferfinger 70 des Übergabegreifers 66 sind dabei so ausgeführt, dass die Wickeleinheit 93 seitlich zwischen Zellstapel 10 und Übergabegreifer 66 einfahren kann, siehe Fig. 17.

Sobald die Wickeleinheit 93 positioniert ist, wird der Zellstapel 93 zwischen den sogenannten Wickelschwertern 96a-96d gegriffen. Die Wickelschwerter 96a-96d werden dazu über die Zustellachse 102 (d.h. hier Aktor zum Zustellen) von einer Seite eingefahren und anschließend dieser und auf der gegenüberliegenden Seite geklemmt (Arbeitsposition); vorzugsweise erfolgt die Klemmung synchron.

Die Wickelschwerter 96a-96d sind derart ausgebildet, dass der Separator 16 nicht um die empfindlichen Elektrodenkanten umgeschlagen wird. Somit nehmen die Wickelschwerter 96a-96d die Kraft auf und fixieren den Zellstapel 10 gleichzeitig, siehe Fig. 18 bis 21.

Die Übergabe des Zellstapels 10 erfolgt in der vertikalen Stellung der gabelförmigen Greifelemente 94-1, 94-2, siehe Fig. 17 bis 20. Auch die im Querschnitt flach ausgebildeten Wickelschwerter 96a-96d sind beim Einfahren vertikal ausgerichtet. Dies hat den großen Vorteil, dass die Wickelschwerter 96a-96d auch in der vertikalen Lage in den Zellstapel 10 einfahren. Aufgrund der vertikalen Ausrichtung sind die flachen Wickelschwerter 96a-96d dadurch steifer, als in der horizontalen Lage.

Nachdem der Zellstapel zwischen den Wickelschwertern 96a-96d fixiert wurde, löst der Übergabegreifer 66 und fährt wiederrum nach unten frei.

Anschließend startet der Wickelprozess siehe Fig. 20 und 21. Dabei wird der Separator 16 außen um die Wickelschwerter 96a-96d geschlagen. Dadurch wird sichergestellt, dass die empfindlichen Elektrodenkanten nicht beschädigt werden.

Zum Wickeln wird im ersten Schritt das benötigte Material aus dem Separatorspeicherpuffer 28 nachgeführt, d.h. die Walzen 78-1 bis 78-3 fahren wieder in ihre Grundposition zurück, vergleiche Fig. 11.

Sobald die Walzen 78-1, 78-3 aus dem Weg freigefahren sind, wird die restliche Separatorbahn 26 durch Absenken des Trenngreifers 32 nachgeführt, siehe Fig. 23.

Im Folgenden wird eine Ausführung der Bahnspanneinheit 98 erläutert. Damit während des gesamten Wickelvorgangs die Bahnspannung konstant gehalten wird, hat der Trenngreifer 32 eine zusätzliche Drehlagerung. Über eine mechanische oder pneumatische Feder (später näher erläutert) kann dabei die Gegenkraft zur Aufrechterhaltung der Bahnspannung variabel eingestellt werden.

Im unteren Bereich der Vertikalachse (Bewegungsmechanismus zur Vertikalbewegung des Trenngreifers) führt der Trenngreifer 32 über die Kurvenscheibe 108 (oder einen separaten Aktor) zusätzlich zur vertikalen Hubbewegung noch eine horizontale Querbewegung aus. Dadurch kann sichergestellt werden, dass die Trennstelle 82 auf dem Zellstapel mittig (oder entsprechend den Kundenforderungen) positioniert werden kann, siehe Fig. 24 und 25.

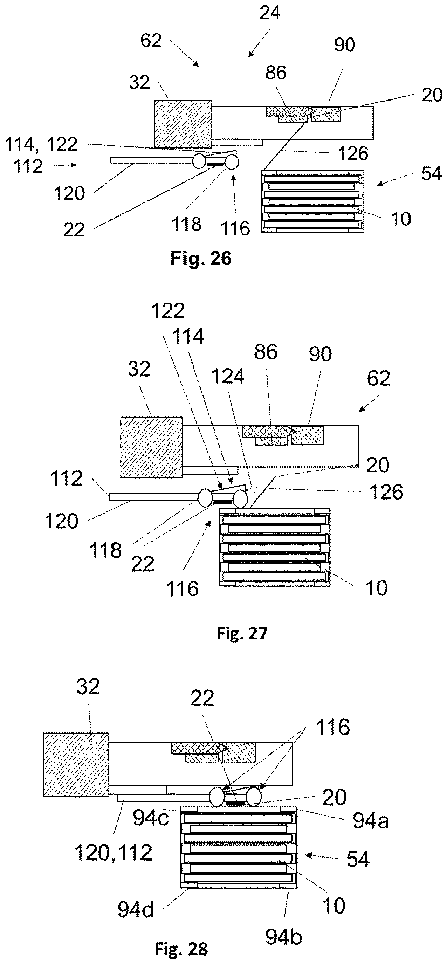

Im Folgenden werden anhand der Figuren 26 bis 28 der weitere Schritt:
g) Fixieren der Trennstelle 82 der Separatorbahn 26 an dem umwickelten Zellstapel 10 sowie die hierzu bei der Vorrichtung 24 vorgesehenen Einheiten näher erläutert.

Gemäß den Fig. 26 bis 28 weist die Vorrichtung 24 eine Positionier- und/oder Fixiereinheit 116 zum Positionieren und/oder Fixieren des Endbereichs 126 der Separatorbahn 26 an dem umwickelten Zellstapel 10, vorzugsweise mittels Aufbringens wenigstens eines Fixiermittels wie insbesondere des Klebestreifens 22, auf. Weiter weist die Vorrichtung 24 eine Fluidstromapplikatoreinheit 114 zum Applizieren einer Fluidströmung auf den Endbereich 126 am Ende 20 der Separatorbahn 26 zum Verhindern von Faltenwurf auf. Weiter weist die Vorrichtung 24 eine Glättungseinheit 116 zum Glattstreichen des Endbereichs 126 der Separatorbahn 26, vorzugsweise mittels wenigstens einer Rolle 118 oder einem voreilenden runden Element oder alternativ oder zusätzlich mittels einer Glättfläche (nicht dargestellt), auf.

Bei der dargestellten Ausführungsform ist die Positionier- und Fixiereinheit 112 als durch die Steuerung 34 ansteuerbarer Appliziergreifer 120 ausgebildet. Der Appliziergreifer 120 ist zum Durchführen der folgenden Bewegungen und Funktionen ausgebildet. An dem Appliziergreifer 120 ist ein Luftschwert 122 als Fluidstromapplikatoreinheit 114 vorgesehen, mittels dem ein Luftstrom 124 auf den Endbereich 126 anlegbar ist. Weiter sind an dem Appliziergreifer 120 mehrere walzenförmige Rollen 118 der Glättungseinheit 116 vorgesehen. Der Appliziergreifer 120 kann weiter mit einer Spendeneinheit mit einem Vorrat an Klebestreifen 22, beispielsweise mit Klebestreifenrolle und Schneidvorrichtung (nicht dargestellt), zusammenwirken, um jeweils wenigstens einen Klebestreifen 22 aufzunehmen.

Der Schritt g) weist bei der dargestellten Ausführungsform des Verfahrens folgende Schritte auf:
g1) Festhalten der Trennstelle 82 der Separatorbahn 26 mittels des nachführenden Trenngreifers 32, der -wie oben erläutert - zum Trennen der Separatorbahn 26 und Festhalten der Trennstelle 82 ausgebildet ist;
g2) Applizieren einer Fluidströmung - hier Luftstrom 124 zum Verhindern von Faltenwurf;
g3) Glattstreichen des Endbereichs 126 der Separatorbahn 126 mittels der wenigstens einen Rolle 118;
g4) Fixieren des Endbereichs 126 der Separatorbahn 26 an dem umwickelten Zellstapel 10 mittels Aufbringens des wenigstens einen Klebestreifens 22; und
g5) Übergeben des umwickelten Zellstapels 10 an nachfolgende Prozesse, vorzugsweise mit im Wesentlichen vertikal ausgerichteten Zellkomponenten 12, 14.

Genauer zeigt Fig. 26 eine schematische Ansicht des umwickelten Zellstapels 10 mit dem Trenngreifer 32, der das Ende 20 hält, und der Positionier- und Fixiereinheit 112 mit dem Appliziergreifer 120 zum Positionieren und Fixieren des Endes 20 des Separators 16 an dem Zellstapel 10, wobei der Appliziergreifer 120 in der Grundposition dargestellt ist. Die Trennstelle 82 des Separators 16 ist noch in dem Trenngreifer 32 geklemmt. Fig. 27 zeigt eine Ansicht wie in Fig. 26, wobei der Appliziergreifer 120 beim Abrollen des Separators 26 gezeigt ist. Der Trenngreifer 32 lässt die Trennstelle 82 los (die Schneide 88 mit der Klemmleiste 86 sind von der Gegenlagerung 90 weg gefahren), und der Appliziergreifer 120 sorgt für eine saubere Positionierung des Endbereichs 126 ohne Faltenwurf und Umknicken. Fig. 28 zeigt eine Ansicht wie in Fig. 26, wobei der Appliziergreifer 120 beim Andrücken des Klebestreifens 22 zum Fixieren des Endes 20 gezeigt ist. Das entsprechend dargestellte Verfahren läuft wie folgt ab:
Parallel zum Wickelvorgang zieht der Appliziergreifer 120 einen Klebestreifen 22 aus einer Spendeneinheit ab.

Der Appliziergreifer 120 ist so ausgeführt, dass er am vorderen Ende zusätzliche Rollen 118 hat, die das Ende 20 des Separators 16 sauber auf dem Zellstapel 10 anlegen. Zudem ist die Positionier- und Fixiereinheit 112 federnd gelagert, so dass der Appliziergreifer 120 Höhenunterschiede (z.B. beim Überfahren der Wickelschwerter) ausgleichen kann. Des Weiteren ist das Luftschwert 122 integriert, das beim Lösen der Klemmung des Separators 16 im Trenngreifer 32 verhindert, dass dieser Falten wirft oder eine falsche Ausrichtung der Kante (Ende 20) durch z.B. Umknicken erfolgt.

Am Ende des Wickelvorgangs öffnet der Trenngreifer 32 die Klemmung des Separators 16 und das freie Ende 20 wird dann über den Appliziergreifer 120 auf dem Zellstapel 10 angedrückt, siehe Fig. 17 und 28.

Sobald der Appliziergreifer 120 in der Endposition steht, drückt die Hubachse (Aktor zum Heben und Senken) des Trenngreifers 32 den Appliziergreifer 120 und somit auch das Tape (Beispiel für Klebestreifen 22) auf den Zelltstapel 10, siehe Fig. 28. Nun ist der Separator 16 fixiert.

Abschließend wird der Zellstapel 10 wieder vom Übergabegreifer 66 gegriffen, die Wickelschwerter 96a-96d werden seitlich herausgezogen und der Zellstapel 10 kann an Nachfolgeprozesse übergeben werden.

Auch diese Entnahme des Zellstapels 10 aus der Wickeleinheit 93 erfolgt wie das Beladen des Zellstapels 10 in die Wickeleinheit 93 in vertikaler Ausrichtung.

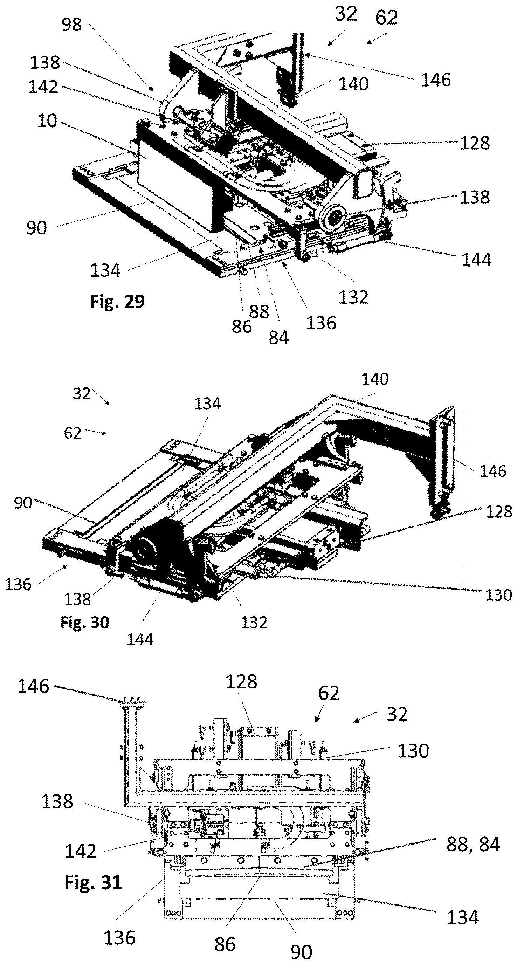

Der Trenngreifer 32 kann ganz unterschiedlich ausgebildet sein. Im Folgenden wird eine mögliche konkrete Ausführungsform anhand der Darstellungen in den Fig. 29 bis 31 näher erläutert.

Wie oben bereits erläutert, weist der Trenngreifer 32 die Schneideinrichtung 84 zum Durchtrennen der Separatorbahn 26 und Greifelemente zum Halten der Trennstelle 82 auf.

Die Schneideinrichtung 84 weist eine Schneide 88 und einen beispielsweise einen Pneumatikzylinder 128 umfassenden Antrieb zum Bewegen der Schneide 88 zum Durchtrennen der Separatorbahn 26 auf.

Das eine Greifelement, das in den dargestellten Ausführungsformen als Klemmleiste 86 ausgebildet ist, läuft federnd der Schneide 88 voraus. Hierzu ist an der beweglichen Schneide 88 eine Druckfeder 130 für die Separatorklemmung vorgesehen. Die Klemmleiste 86 bewegt sich mit der Schneide 88 mit und ist mittels der Druckfeder 130 relativ zu dieser in Richtung auf die Gegenlagerung 90 zu vorgespannt.

Beispielsweise ist die Schneide 88 als Schneidmesser, z.B. als Platte mit hier schräg verlaufener Schneidkante, ausgeführt und an einer Führung 132 durch den Pneumatikzylinder verschiebbar gelagert. An dem Schneidmesser oder einem damit fest verbundenen Element - z.B. Messerhalterung - stützt sich ein Ende der Druckfeder 130 ab. Das andere Ende stützt sich an der Klemmleiste 86 ab, die ebenfalls an der Führung 132 parallel zum Schneidmesser verschiebbar gelagert ist. Beim Schneiden läuft somit die Klemmleiste 86 der Schneide 88 vor, bis sie mit der Separatorbahn 26 dazwischen gegen die Gegenlagerung 90 anstößt und somit die Separatorbahn 26 an der Gegenlagerung 90 klemmt. Durch Weiterbewegen des Pneumatikzylinders 128 wird dann die Schneide 88 entgegen der Druckspannung der Druckfeder 130 weiterbewegt, um den Separator 16 zu durchtrennen. Nach dem Trennvorgang bleibt die Trennstelle 82 zwischen der durch die Druckfeder 130 beaufschlagten Klemmleiste 86 und der Gegenlagerung 90 unter Druck der Druckfeder 130 geklemmt und wird somit festgehalten. Somit ist die Schneide 88 zum Halten und Durchtrennen in Richtung auf ein als Gegenlager 90 ausgebildetes weiteres Greifelement zu beweglich, um die Separatorbahn 26 zwischen dem federnd vorgelagerten Greifelement - hier z.B. der Klemmleiste 86 -und dem Gegenlager 90 zu fixieren und durch Weiterbewegung der Schneide 88 zu durchtrennen.

In den Figuren 29 bis 31 ist die Grundstellung und somit die Übergabestellung des Trenngreifers 32 zum Durchführen der in Fig. 10 bis 12 gezeigten Übergabe des Zellstapels 10 vom Stapeln zum Wickeln dargestellt. In der Übergabestellung sind die Schneide 88 mit der Klemmleiste 86 und die Gegenlager 90 so weit voneinander getrennt, dass dazwischen eine Öffnung 134 gebildet ist, durch die der Übergabegreifer 66 mit dem Zellstapel 10 tauchen kann.

Wie oben bereits erwähnt, hat eine bevorzugte Ausgestaltung des Trenngreifers 32 eine zusätzliche Drehlagerung und weiter vorzugsweise eine Vorspanneinrichtung zum Vorspannen des Trenngreifers 32 in eine der Drehrichtungen der Drehlagerung, um eine Bahnspannung der an dem Trenngreifer 32 gehaltenen Separatorbahn 26 beim Wickeln konstant zu halten.

Die Einheit, die die Führung 132 für die Schneide 88 und das damit voreilend bewegbare Greifelement und den Antrieb (hier der Pneumatikzylinder 128) aufweist, ist hierzu z.B. als Wippe 136 ausgebildet, die mittels eines Drehgelenks 138 an einer Trenngreiferhalterung 140 drehbar gelagert ist. An der Wippe 136 ist außerdem die Gegenlagerung 90 mit Abstand zu dem Drehgelenk 138 angeordnet, so dass ein Zug an der zwischen den Greifelementen gehaltenen Separatorbahn ein Drehmoment auf die Wippe 136 ausübt.

An dem Drehgelenk 138 ist ein Drehgeber 142 angeordnet, dessen Signal ein Maß für den Bahnzug an die Steuerung 34 liefert.

Zum Bilden der Vorspanneinrichtung ist vorzugsweise ein Federausgleich 144 für die Wippe 136 vorgesehen. Beispielsweise umfasst der Federausgleich 144 einen weiteren Pneumatikzylinder, der zwischen Wippe 136 und Trenngreiferhalterung 140 abgestützt ist. Der Pneumatikzylinder ist ein Beispiel für eine mechanische oder pneumatische Feder. Bei größerer Bahnspannung wird die Wippe somit mehr ausgelenkt, bei geringerer Bahnspannung weniger, was über den Drehgeber erfasst wird. Bei einer Ausgestaltung steuert die Steuerung 34 abhängig von dem Signal des Drehgebers die Hubachse (Bewegungsapparat/Aktoren) des Trenngreifers 32 beim Nachführen und regelt somit die Bahnspannung. Bei einigen Ausführungsformen kann zusätzlich oder alternativ der Druck in dem weiteren Pneumatikzylinder durch die Steuerung 134, beispielsweise abhängig vom Signal des Drehgebers 142, geregelt werden.

Die Bahnspanneinheit weist somit vorzugsweise die Wippe 136 mit Drehgeber 142 und Federausgleich 144 auf.

Die Klemmleiste 86 weist vorzugsweise eine in den Zeichnungen nicht näher dargestellte Abrundung auf, um die Separatorbahn 26 auch bei Bewegungen der Wippe 136 sanft abzustützen.

Die Steuerung 34 ist dazu ausgebildet, eine Bewegung des Trenngreifers 32 derart zu steuern, dass der Trenngreifer 32 mit daran gehaltener Trennstelle 82 der Separatorbahn 26 beim Wickeln nachgeführt wird und dass die Bahnspannung der durch den Trenngreifer 32 gehaltenen Separatorbahn 26 beim Wickeln aufrechterhalten, geregelt und/oder gesteuert wird.

Die Trenngreiferhalterung 140 verbindet das Drehgelenk 138 mit der daran gelagerten Wippe 136 mit der Hubachse, d.h. einem Bewegungsmechanismus mit Aktoren zum Heben und Senken des Trenngreifers 32. Hierzu ist an der Trenngreiferhalterung 140 eine entsprechende Anbindung 146 an die Hubachse bzw. an die Kurvenscheibe 108 oder einen sonstigen Mechanismus (z.B. durch die Steuerung 34 angesteuerte Aktoren) zur Horizontalbewegung vorgesehen.

Eine bevorzugte Ausgestaltung des Trenngreifers 32 ermöglicht somit zumindest eine oder mehrere oder alle der folgenden Funktionen:
- eine Öffnung 134, durch die der Übergabegreifer 66 samt Zellstapel 10 taucht
- eine Wippe 136 zum Ausgleich des Bahnzugs mit pneumatischer oder mechanischer Feder
- eine Regelung des Bahnzugs über einen Drehgeber 142, der auf dem Greifer sitzt
- Schneideinrichtung 84 mit voreilender Klemmung zur Fixierung des Separators 16
- eine Vorspannung der voreilenden Klemmung über Federn 130
- die Klemmleiste 86 wird zudem mit einem Radius ausgeführt, über den der Separator 16 geführt wird, wenn die Wippe 136 zum Bahnzugausgleich ausschlägt
- (nicht dargestellt) Kurvenscheibenverstellung und Hubachse.

Um umwickelte Zellstapel in Großserie schneller und dennoch prozesssicher herzustellen, sind ein Verfahren und eine Vorrichtung (24) zur Herstellung z-gefalteter Zellstacks (10) beschrieben worden. Damit werden erste und zweite Zellkomponenten (12, 14) wechselweise gestapelt, während eine Separatorbahn (26) z-förmig oder mäanderförmig dazwischen eingefügt wird und anschließend um den so erhaltenen Zellstapel (10) noch einmal gewickelt wird. Das Verfahren und die Vorrichtung sind so ausgebildet, dass das Wickeln zumindest teilweise parallel an einem zuvor erhaltenen Zellstapel (10) durchgeführt wird, während bereits das Stapeln zum Erhalten des nächsten Zellstapels (10) durchgeführt wird. Hierzu wird ein Vorrat der Separatorbahn (26), der zum Wickeln benötigt wird, in einem Separatorpufferspeicher (28) bereitgestellt, am in Förderrichtung hinteren Ende mittels eines Trenngreifers (32) abgeschnitten und festgehalten und beim Wickeln mittels des Trenngreifers (32) nachgeführt.

### Bezugszeichenliste:

- 10: Zellstapel
- 12: erste Zellkomponente
- 14: zweite Zellkomponente
- 16: Separator
- 18: Leerfalte
- 20: freies (hinteres) Ende des Separators
- 22: Klebestreifen
- 24: Vorrichtung
- 26: Separatorbahn
- 28: Separatorpufferspeicher
- 32: Trenngreifer
- 34: Steuerung
- 36: Stapeleinrichtung
- 38: Stapeltisch
- 40: Halteelement
- 42a: erste Niederhaltefinger (rechts)
- 42b: zweite Niederhaltefinger (links)
- 44: Kathodenmagazin
- 46: Kathodengreifer
- 48: Anodenmagazin
- 50: Anodengreifer
- 52: Separatorbahneinfügeeinrichtung
- 54: Wickeleinrichtung
- 56: Vorrat
- 58: Längenabschnitt
- 60: Überführungseinrichtung
- 62: Trenn- und Halteeinrichtung
- 64: Schwenkeinrichtung
- 66: Übergabegreifer
- 68: Greifernut
- 70: Greiferfinger (des Übergabegreifers)
- 72: Drehachse
- 74-1: erste Umlenkrolle
- 74-2: zweite Umlenkrolle
- 74-3: dritte Umlenkrolle
- 76: Schleife
- 78-1: obere Umlenkwalze
- 78-2: Speicherwalze
- 78-3: untere Umlenkwalze
- 80-1: erste Verschiebeführung
- 80-2: zweite Verschiebeführung
- 80-3: dritte Verschiebeführung
- 82: Trennstelle
- 84: Schneideinrichtung
- 86: Klemmleiste
- 88: Schneide
- 90: Gegenlagerung
- 92: Wickelgreifer
- 93: Wickeleinheit
- 94-1: erstes gabelförmiges Greifelement (mit ersten Zinkenpaar)
- 94-2: zweites gabelförmiges Greifelement (mit zweiten Zinkenpaar)
- 96a: erstes Wickelschwert
- 96b: zweites Wickelschwert
- 96c: drittes Wickelschwert
- 96d: viertes Wickelschwert
- 98: Bahnspanneinheit
- 100: Übergriff
- 102: Zustellachse
- 104: Klemmung
- 106: Drehlager
- 107: Rotationsachse
- 108: Kurvenscheibe
- 110: Lage der Stoßkante
- 112: Positionier- und Fixiereinheit
- 114: Fluidstromapplikatoreinheit
- 116: Glättungseinheit
- 118: Rolle
- 120: Appliziergreifer
- 122: Luftschwert
- 124: Luftstrom
- 126: Endbereich
- 128: Pneumatikzylinder (Schneideinrichtung/Klemmeinheit)
- 130: Druckfeder (für Separatorklemmung)
- 132: Führung
- 134: Öffnung
- 136: Wippe
- 138: Drehgelenk
- 140: Trenngreiferhalterung
- 142: Drehgeber
- 144: Federausgleich
- 146: Anbindung
- A: Anode
- K: Kathode

## Patentansprüche

1. Verfahren zur Herstellung z-gefalteter Zellstacks (10), umfassend:
a) Bereitstellen von ersten und zweiten Zellkomponenten (12, 14) und Bereitstellen einer Separatorbahn (26),
b) Wechselweises Stapeln der ersten und zweiten Zellkomponenten (12, 14), wobei die Separatorbahn (26) z-förmig oder mäanderförmig derart dazwischen eingefügt wird, dass sie wechselweise auf einer ersten Seite um eine vorhergehend platzierte Zellkomponente umgeschlagen wird und dann auf einer der ersten Seite gegenüberliegenden zweiten Seite um eine nachfolgend platzierte Zellkomponente umgeschlagen wird, um so einen Zellstapel (10) zu erhalten;
d) Bereitstellen eines Längenabschnitts (58) der Separatorbahn (26) in einem Separatorpufferspeicher (28);
e) Durchtrennen der Separatorbahn (26) am in Förderrichtung hinteren Ende (20) des Längenabschnitts (58) mittels eines beweglichen Trenngreifers (32) und Festhalten der Trennstelle (82) im Bereich des hinteren Endes (20) mittels des Trenngreifers (32); und
f) Wickeln des in Schritt d) bereitgestellten Längenabschnitts (58) der Separatorbahn (26) um den in Schritt b) erhaltenen Zellstapel (10), wobei die Trennstelle (82) mittels des diese festhaltenden Trenngreifers (32) nachgeführt wird;
wobei Schritt f) zumindest teilweise parallel an einem zuvor erhaltenen Zellstapel (10) durchgeführt wird, während Schritt b) zum Erhalten des nächsten Zellstapels (10) durchgeführt wird.

2. Verfahren nach Anspruch 1, **dadurch gekennzeichnet,**
**dass** Schritt e) wenigstens einen oder mehrere der Schritte umfasst:
e1) Aufeinander zu Bewegen eines ersten und zweiten Greifelements des Trenngreifers (32), um die Separatorbahn (26) dazwischen zu erfassen, und Bewegen einer Schneide (88) des Trenngreifers (32) relativ zu dem ersten und/oder zweiten Greifelement, um die Separatorbahn (26) zu durchtrennen;
e2) Bewegen einer Halte- und Schneideinheit des Trenngreifers (32), die eine Schneide (88) und ein zu der Schneide (88) bewegbares und eine der Schneide (88) vorauslaufend vorgespanntes, insbesondere als Klemmleiste (86) ausgebildetes, Greifelement aufweist, auf die Separatorbahn (26) zu, um diese zwischen dem Greifelement und einem Gegenlager (90) zu halten und das Durchtrennen unter Vorschieben der Schneide (88) über das gegen das Gegenlager (90) und die Separatorbahn (26) anliegende Greifelement durchzuführen.

3. Verfahren nach einem der voranstehenden Ansprüche, **dadurch gekennzeichnet,**
**dass** Schritt f) wenigstens einen oder mehrere der Schritte umfasst:
f1) Spannen der Separatorbahn (26);
f2) Einstellen, Aufrechterhalten, Regeln und/oder Steuern der Bahnspannung der Separatorbahn (26) beim Wickeln;
f3) elastisches Vorspannen des Trenngreifers (32) zum Spannen der Separatorbahn (26);
f4) variables Einstellen einer Gegenkraft zum Konstanthalten der Bahnspannung während des gesamten Wickelvorganges an einer zusätzlichen Drehlagerung des Trenngreifers (32), insbesondere über eine mechanische oder pneumatische Feder.

4. Verfahren nach einem der voranstehenden Ansprüche, **gekennzeichnet durch** den Schritt:
c) Überführen des Zellstapels (10) von einer Stapeleinrichtung (36) zu einer Wickeleinrichtung (54);
wobei in Schritt c) der Zellstapel (10) zwischen geöffneten Greifelementen, insbesondere einer Klemmleiste (86) und einer Gegenlagerung (90), des Trenngreifers (32) hindurch bewegt wird.

5. Verfahren nach einem der voranstehenden Ansprüche, **gekennzeichnet durch** wenigstens einen oder mehrere der Schritte:
g) Fixieren einer Trennstelle (82) der Separatorbahn (26) an dem umwickelten Zellstapel (10);
g1) Zuführen der Trennstelle (82) zu dem umwickelten Zellstapel (10) mittels des Trenngreifers (32);
g2) Applizieren einer Fluidströmung zum Vermeiden oder zumindest Verringern von Faltenwurf;
g3) Glattstreichen eines Endbereichs (126) der Separatorbahn (26), vorzugsweise mittels wenigstens einer Rolle (118) oder einem voreilenden rundlichen Element;
g4) Fixieren eines Endbereichs (126) der Separatorbahn (26) an dem umwickelten Zellstapel (10), vorzugsweise mittels Aufbringens wenigstens eines Klebestreifens (22);
g5) Übergeben des umwickelten Zellstapels (10) an nachfolgende Prozesse, vorzugsweise mit im Wesentlichen vertikal ausgerichteten Zellkomponenten (12, 14).

6. Verfahren nach einem der voranstehenden Ansprüche, **dadurch gekennzeichnet, dass** der Zellstapel (10) zumindest während aller Überführungen und Bewegungen bis zur endgültigen Fixierung mittels Tapeapplikation nach dem Umwickeln zur Beibehaltung der Position der Zellkomponenten (12, 14) in dem Zellstapel (10) mechanisch geklemmt wird.

7. Vorrichtung (24) zur Herstellung z-gefalteter Zellstacks (10), umfassend:
eine Stapeleinrichtung (36) zum wechselweisen Stapeln einer ersten und einer zweiten Zellkomponente (12, 14) zu einem Zellstapel (10), wobei die Stapeleinrichtung (36) eine Separatorbahneinfügeeinrichtung (52) zum z-förmigen oder mäanderförmigen Einfügen einer Separatorbahn (26) zwischen den Zellkomponenten (12, 14) derart, dass die Separatorbahn (26) wechselweise auf einer ersten Seite um eine vorhergehend platzierte Zellkomponente umgeschlagen ist und dann auf einer der ersten Seite gegenüberliegenden zweiten Seite um eine nachfolgend platzierte Zellkomponente umgeschlagen ist, aufweist,
eine Wickeleinrichtung (54) zum Wickeln der Separatorbahn (26) um den durch die Stapeleinrichtung (36) gestapelten Zellstapel (10),
einen Trenngreifer (32), der zum Trennen der Separatorbahn (26) an einem in Förderrichtung der Separatorbahn (26) hinteren Ende (20) eines zum Wickeln um den Zellstapel (10) zu verwendenden Vorrats (56) der Separatorbahn (26) und zum Halten der Trennstelle (82) an dem hinteren Ende (20) ausgebildet ist, wobei der Trenngreifer (32) zum Nachführen der gehaltenen Trennstelle (82) beweglich ist, und
eine Steuerung (34),
wobei die Vorrichtung (24) ausgebildet ist, das Wickeln der Separatorbahn (26) um einen zuvor erhaltenen Zellstapel (10) in der Wickeleinrichtung (54) zumindest teilweise parallel zu einem Stapeln eines nächsten Zellstapels (10) in der Stapeleinrichtung (36) durchzuführen.

8. Vorrichtung nach Anspruch 7, **dadurch gekennzeichnet,**
**dass** der Trenngreifer (32) eine Schneideinrichtung (84) zum Durchtrennen der Separatorbahn (26) und Greifelemente zum Halten der Trennstelle (82) aufweist.

9. Vorrichtung nach Anspruch 8, **dadurch gekennzeichnet,**
**dass** die Schneideinrichtung (84) eine Schneide (88) und einen Antrieb zum Bewegen der Schneide (88) zum Durchtrennen der Separatorbahn (26) aufweist, wobei ein, insbesondere als Klemmleiste (86) ausgebildetes, Greifelement federnd der Schneide (88) vorausläuft.

10. Vorrichtung nach Anspruch 9, **dadurch gekennzeichnet,**
**dass** die Schneide (88) zum Halten und Durchtrennen in Richtung auf ein als Gegenlager (90) ausgebildetes weiteres Greifelement zu beweglich ist, um die Separatorbahn zwischen dem federnd vorgelagerten Greifelement und dem Gegenlager zu fixieren und durch Weiterbewegung der Schneide zu durchtrennen.

11. Vorrichtung nach einem der Ansprüche 7 bis 10, **dadurch gekennzeichnet,**
**dass** die Steuerung dazu ausgebildet ist, eine Bewegung des Trenngreifers (32) derart zu steuern,
11.1 dass der Trenngreifer (32) mit daran gehaltener Trennstelle (82) der Separatorbahn (16) beim Wickeln nachgeführt wird und/oder
11.2 dass eine Bahnspannung der durch den Trenngreifer gehaltenen Separatorbahn (16) beim Wickeln aufrechterhalten, geregelt und/oder gesteuert wird.

12. Vorrichtung nach einem der Ansprüche 7 bis 11, **dadurch gekennzeichnet,**
**dass** der Trenngreifer (32) eine zusätzliche Drehlagerung und eine Vorspanneinrichtung zum Vorspannen des Trenngreifers (32) in eine der Drehrichtungen der Drehlagerung aufweist, um eine Bahnspannung der an dem Trenngreifer (32) gehaltenen Separatorbahn (26) beim Wickeln konstant zu halten.

13. Vorrichtung (24) nach einem der Ansprüche 7 bis 12, **gekennzeichnet durch** wenigstens eine oder mehrere der folgenden Einheiten:
13.1 einen Separatorpufferspeicher (28) zum Zwischenspeichern eines zum Wickeln in der Wickeleinrichtung (54) zu verwendenden Vorrats (56) oder Längenabschnitts (58) der Separatorbahn (26), wobei der Separatorpufferspeicher (28) vorzugsweise zwischen der Stapeleinrichtung (36) und der Wickeleinrichtung (54) angeordnet ist und/oder vorzugsweise relativ zueinander bewegliche Umlenkrollen (74-1, 74-2, 74-3) zum Aufbau wenigstens einer Schleife (76) der Separatorbahn (26) als Vorrat (56) aufweist;
13.2 eine Überführungseinrichtung (60) zum Überführen des Zellstapels (10) von der Stapeleinrichtung (36) zu der Wickeleinrichtung (54), wobei die Überführungseinrichtung (60) vorzugsweise dazu eingerichtet ist,
den Zellstapel (10) aus einer Stapellage mit zum Stapeln im Wesentlichen horizontal ausgerichteten Zellkomponenten (12, 14) in eine Überführungslage mit im Wesentlichen vertikal ausgerichteten Zellkomponenten (12, 14) zu kippen und/oder
die Separatorbahn (26) beim Überführen des Zellstapels (10) von der Stapeleinrichtung (36) zu der Wickeleinrichtung (54) nachzuziehen und/oder
den Zellstapel zwischen geöffneten Greifelementen des Trenngreifers (32) hindurch zu bewegen;
13.3 eine Fluidstromapplikatoreinheit (114) zum Applizieren einer Fluidströmung auf einen Endbereich (126) der Separatorbahn (26) zum Verhindern von Faltenwurf;
13.4 eine Glättungseinheit (116) zum Glattstreichen eines Endbereichs (126) der Separatorbahn (26), vorzugsweise mittels wenigstens einer Rolle (118);
13.5 eine Positionier- und/oder Fixiereinheit (112) zum Positionieren und/oder Fixieren des Endbereichs (126) der Separatorbahn (26) an dem umwickelten Zellstapel (10), vorzugsweise mittels Aufbringens wenigstens eines Klebestreifens (22);
13.6 eine Bahnspanneinheit (98) zum Einstellen, Aufrechterhalten, Regeln und/oder Steuern der Bahnspannung der Separatorbahn (26) beim Wickeln.

14. Vorrichtung (24) nach einem der Ansprüche 7 bis 13, **dadurch gekennzeichnet,**
**dass** die Steuerung (34) dazu eingerichtet ist, die Vorrichtung (24) zum Durchführen des Verfahrens nach einem der Ansprüche 1 bis 6 anzusteuern.

15. Computerprogramm, umfassend Anweisungen, die die Vorrichtung (24) nach einem der Ansprüche 7 bis 14 veranlassen, das Verfahren nach einem der Ansprüche 1 bis 6 durchzuführen.
